# EUROPEAN PATENT SPECIFICATION

(11) **EP 1 915 007 B1**
(45) Date of publication and mention of the grant of the patent: **22.08.2012**
(21) Application number: 06781427.7
(22) Date of filing: 21.07.2006
(51) Int. Cl.: H04L 12/413, H04W 74/08

(54) **Communication terminal apparatus**
Kommunikations-Endgerätevorrichtung
Appareil terminal de communication

(30) Priority: 21.07.2005 JP 2005211838; 16.09.2005 JP 2005270896
(43) Date of publication of application: 23.04.2008
(73) Proprietor: KABUSHIKI KAISHA TOYOTA CHUO KENKYUSHO, Nagakute-shi, Aichi-ken 480-1192 (JP)
(72) Inventor: MAKIDO, Satoshi K. K. TOYOTA CHUO KENKYUSHO, Aichi-gun Aichi 4801192 (JP); SUZUKI, Noriyoshi K. K. TOYOTA CHUO KENKYUSHO, Aichi-gun Aichi 4801192 (JP)
(74) Representative: Kramer - Barske - Schmidtchen
(86) International application number: PCT/JP2006/314505
(87) International publication number: WO 2007/011031

(56) References cited:
- JP-A- 05 206 933
- JP-A- 2000 013 853
- JP-A- 2000 252 910
- JP-A- 2003 179 965
- JP-A- 2005 086 408
- JP-A- 2005 252 645
- BORGONOVO F ET AL: "ADHOC MAC: New MAC Architecture for Ad Hoc Networks Providing Efficient and Reliable Point-to-Point and Broadcast Services" WIRELESS NETWORKS ; THE JOURNAL OF MOBILE COMMUNICATION, COMPUTATION AND INFORMATION, KLUWER ACADEMIC PUBLISHERS, DO LNKD- DOI:10.1023/B:WINE.0000028540.96160.8A, vol. 10, no. 4, 1 July 2004 (2004-07-01), pages 359-366, XP019216698 ISSN: 1572-8196
- GIUSEPPE CAIZZONE ET AL: "Performance Analysis of a Flexible MAC Protocol for Real-Time Services in Vehicular Ad-Hoc Networks" 1 July 2005 (2005-07-01), INTERNATIONAL JOURNAL OF WIRELESS INFORMATION NETWORKS, KLUWER ACADEMIC PUBLISHERS-PLENUM PUBLISHERS, NE, PAGE(S) 147 - 157 , XP019279718 ISSN: 1572-8129 * abstract * * chapter 3 *

## Description

### Technical Field

The present invention relates to a communication terminal apparatus, for example, relates to a communication terminal apparatus mounted to a moving member and preferably used for exchanging information periodically between moving members.

### Background Art

According to a CSMA (Carrier Sense Multiple Access) system constituting one of communication systems used in wireless LAN, a terminal (node) to which a data is intended to transmit monitors a packet communication situation of other terminal (carrier sense) and starts transmission by a timing of evacuating a data.

According to such a wireless system, for example, a certain terminal A can only monitor a data of other terminal present at a periphery of the terminal A itself. Further, when a number of other terminals are present at the periphery of the terminal A, the terminal A cannot be provided with a timing of transmitting a data of the terminal A itself to pose a problem that transmission of the data is significantly delayed.

Hence, in order to resolve the above-described problem, there is proposed a method of making an access by subjecting a frame to time division to n slots. Respective terminals exchange information by monitoring information of occupying a slot by a unit of a frame and embedding information of occupying the slot in a transmission packet in addition to a transmission data of the terminal of its own (refer to Nonpatent Reference 1). The frame is constituted by, for example, 100 ms and the respective slots are occupied by respective terminals different from each other.

Further, according to an adhoc network for exchanging information by communication by measuring data periodically, it is important to be able to communicate with a contiguous terminal firmly within a unit time period, that is, band guarantee and arrivability are important.

In a background art, there is proposed a communication system with an object of promoting a stability of a throughput constituting an effective transmission amount per unit time of a total of a system (refer to, for example, Patent Reference 1). According to a communication system described in Patent Reference 1, as a transmission system of a transmitting portion 103 and a modulating portion 105, a coding rate, a modulation/demodulation system and the like are selected by a transmission system selecting portion 111, and communication is carried out by the transmission system. Storing regions of a transmission memory 101 and a reception memory 107 are allocated in accordance with a request Smr from an application. In receiving a data, an average throughput of a reception data written to the storing region is measured. The transmission system is newly selected in accordance with a measured value thereof. A time period of measuring a throughput is set in accordance with a transmission system currently selected and a size of the allocated storing region, for example, the larger the storing region, the longer the measuring interval can be made. Therefore, the transmission system is not frequently changed and the throughput can be stabilized.

Further, in Patent Reference 2, there is proposed a scheduling algorism for guaranteeing a minimum data transmission service even to an access terminal AT a channel condition of which is not excellent.

A method (algorithm) described in Patent Reference 2 is a method of dynamically scheduling communication for a plurality of receivers by a TDMA channel divided into frames comprising slots. Specifically, channel conditions of respective receivers are measured, based on the channel conditions, a plurality of the receivers are divided into receiver groups, the TDMA channel is divided into continuous sequences comprising slots, the respective sequences are divided into slot groups of certain numbers, and based on the channel condition of the receivers, the slot groups are allocated to the receiver groups.

In this way, the technology described in Patent References 1 and 2 achieve to promote a throughput constituting an effective transmission amount per unit time of a total of the system.
Patent Reference 1: JP-A No. 2003-198416
Nonpatent Reference 2: Japanese Patent Publication No. 3616788
Nonpatent reference 1: F.BORGONOVO et al, "ADHOC MAC: NEW MAC Architecture for Ad Hoc Net works Providing Efficient and Reliable Point-to-Point and Broadcast services", Wireless Networks 10,359-366, 2004
Borgonovo F et al: "ADHOC MAC: New MAC Architecture for Ad Hoc Networks Providing Efficient and Reliable Point-to-Point and Broadcast Services" in Wireless Networks, the Journal of Mobile Communication, Computation and Information, Kluwer Academic Publishers, Vol. 10, No. 4, pages 359-366, XP019216698, ISSN: 1572-8196 presents a MAC architecture capable of solving issues relating to Ad-hoc networking, such as the hidden-terminal problem, flexible and prompt access, QoS provisioning, and efficient broadcast service.
Giuseppe Caizzone et al: "Performance Analysis of a Flexible MAC Protocol for Real-Time Services in Vehicular Ad-Hoc Networks" in International Journal of Wireless Information Networks, Vol. 12, No. 3, Pages 147-157, Kluwer Academic Publishers - Plenum Publishers, NE, XP019279718, ISSN: 1572-8129 presents an evaluation of the performance of MAC protocols for ad-hoc networks for topologies with a large number of nodes in scenarios with fast moving users.

### Disclosure of the Invention

### Problems to be solved by the Invention

However, Nonpatent Reference 1 is on the premise that a link of a wireless network is stable, and it does not take any adequate measure against a case of changing a topology of the wireless network. Therefore, there poses a problem that when the link of the wireless network is not stabilized by fading of a certain terminal, the respective terminals cannot firmly be communicated with each other.

Further, the technology described in Patent Reference 1 is a control technology for achieving a stabilized throughput by maintaining a connection by preventing a modulation system from being changed frequently against an abrupt reduction in the throughput. Therefore, although the technology is preferable for a use in which a communication is intended to maintain stably and continuously for a specified communication link, the technology is not suitable for a communication system in which it is necessary that a number of users periodically exchange data and the control is carried out frequently at short time intervals.

The technology described in Patent Reference 2 is aimed at promotion of a throughput in a total of the system. Slots are allocated in accordance with S/N, and therefore, a number of slots are allocated predominantly to terminals having excellent S/N. Conversely, slots allocated to terminals having poor S/N are relatively reduced. Therefore, although an actual transmission amount of the total of the system is increased, when the respective terminals intend to transmit data repeatedly at predetermined intervals, there is a possibility that a user having poor S/N cannot ensure a band.

The invention has been proposed in order to resolve the above-described problem and it is an object thereof to provide a communication terminal apparatus capable of firmly carrying out mutual communication between terminals even when the link of the network is not stabilized.

Further, it is an object of the invention to provide a communication terminal apparatus capable of utilizing a band (slot) effectively even when a number of users is increased or reduced. Further, it is an object thereof to provide a communication terminal apparatus capable of achieving chances of data transmission for respective users firmly at predetermined intervals, that is, capable of stably maintaining a link and guaranteeing a band.

### Means for Solving the Problems

These objects are communication terminal apparatus according to claims 1, 2, 4 and 8. Further advantageous embodiments defined in the dependent claims.

The examples in the description and drawings which are not sovered by the claims are not presented as embodiments of the invention but as examples which are useful for understanding the invention.

The communication terminal apparatus according to claim 1 broadcasts data with one or more of surrounding-terminals for subjecting a frame repeated by a predetermined interval to time division by a plurality of slots and transmitting the data per slot units. The respective communication terminal apparatus transmit data by selecting the slots different from each other in synchronism with the slots. The data transmitted from the respective terminals are added with occupation information (frame) of the slots of an amount of 1 frame generated based on information detected by the respective terminals. The respective terminals select the slots used for transmission by utilizing the frame information provided from the peripheral communication terminals by communication and the frame information detected by its own.

The frame information indicates success or failure of reception of the packet for each slot and is information of 2 values of "busy" or "free". When the packet is correctly received, the frame information becomes "busy" and when the packet is not correctly received, the frame information becomes "free". Here, "free" includes not only when a reception error is brought about but also when collision of packets is brought about, or a situation in which the packet itself is not detected (signal is not present).

The transmission slot selecting means selects the transmission slot based on the frame information provided from the surrounding-terminal stored by an amount of 1 frame and the frame information generated by the frame information generating means based on detection of its own with respect to the slot used by the wireless terminal apparatus itself for transmission. It is necessary to constitute the transmission slot by a slot which is not used for the surrounding-terminal. The transmitting means transmits the packet by the timing of the transmission slot selected by the transmitting means.

According to the invention, the transmission slot selecting means changes the transmission slot when "free" is provided continuously over several frames or more from the same terminal with respect to the transmission slot of its own. Further, when a number of times of detecting "free" does not reach a predetermined number of times continuously, the transmission slot is maintained. Because collision of the packets is not resolved so far as the slot is not changed and when the number of times of detecting "free" reaches the predetermined number of times continuously, collision of the packets can firmly be determined.

Therefore, the invention can firmly determine that collision of the packets is brought about by receiving "free" from the same surrounding-terminal by the predetermined number of times or more continuously over the plurality of frames, and can determine that the collision is not brought about by changing the slot.

The communication terminal apparatus according to claim 2 is a communication terminal apparatus for broadcasting the data between one or more of surrounding-terminals and the communication terminal apparatus for subjecting the frame to time division by the plurality of slots and transmitting the data by the unit of the slot. The respective communication terminal apparatus transmit the data by selecting the slots different from each other in synchronism with the slots. The data transmitted from the respective terminals are added with the occupation information (frame) of the slots of the amount of 1 frame generated based on the information detected by the respective terminals. The respective terminals select the slots used for transmission by utilizing the frame information provided by communication from the peripheral communication terminal and the frame information detected by its own.

The frame information indicates presence/absence of detection of the packet for each slot, and is information of 2 values of detect or nondetect. When the packet is detected, detect is constituted regardless of success or failure of demodulation and when the packet is not detected, nondetect is constituted.

The transmission slot selecting means determines that transmission of its own is succeeded when detect is detected with respect to the slot used for transmission by the terminal of its own and tries transmission by using the same slot even in the next frame. Only when nondetect is detected from all of surrounding-terminals with respect to the slot which is not used by the terminal of its own for transmission, the slot is determined to be a vacant slot. Conversely, transmission is prohibited with respect to the slot at which one or more of detects are detected.

Therefore, the invention can restrain collision of packets when detect is provided from frame information of the packet from the surrounding-terminal with respect to the slot other than the transmission slot of its own by prohibiting transmission newly by using the slot.

The communication terminal apparatus according to claim 4 is a communication terminal apparatus for broadcasting the data between one or more of surrounding-terminals and the communication terminal apparatus for subjecting the frame to time division by the plurality of slots and transmitting the data by the unit of the slot. The respective communication terminal apparatus transmit the data by selecting slots different from each other in synchronism with the slots. The data transmitted from the respective terminals are added with occupation information (frame) of the slots of the amount of 1 frame generated based on information detected by the respective terminals. The respective terminals select the slots used for transmission by utilizing the frame information provided from the peripheral communication terminal by communication and the frame information detected by its own.

The frame information indicates presence/absence of detection of the packet and success or failure of demodulation of each slot and is information of 3 values of "reserve", detect, nondetect. When the packet is detected and the demodulation is succeeded, "reserve" is constituted, when the demodulation is failed although detection of the packet has succeeded, detect is constituted, and when the packet is not detected, nondetect is constituted. The transmission slot selecting means selects the transmission slot based on the frame information.

Therefore, the invention can monitor the communication information further in details and can transmit the packet firmly by selecting an optimum slot as a result thereof by providing "reserve", detect, nondetect for respective slots from the detected frame information in the respective slots and the frame information generated by the frame information generating means based on a detection result of its own and selecting the slot used for transmission based on the information.

The communication terminal apparatus according to claim 8 invention is a communication terminal apparatus for broadcasting data between one or more of surrounding-terminals and the communication terminal apparatus for subjecting the frame to time division by the plurality of slots and transmitting the data by the unit of the slot. The respective communication terminal apparatus transmit the data by selecting the slots different from each other in synchronism with the slots. The data transmitted from the respective terminals are added with occupation information (frame) of the slots of the amount of 1 frame generated based on information detected by the respective terminals. The respective terminals select the slots used for transmission by utilizing the frame information provided from the peripheral communication terminals by communication and the frame information detected by its own.

The frame information indicates presence/absence of detection of the packet, success or failure of demodulation, and large or small of the receiving power for the respective slots and is information of 4 values of "reserve", "high detection", "low detection", and nondetect. When the packet is detected and demodulation is succeeded, "reserve" is constituted, when demodulation is failed even when the packet is detected and when the receiving power exceeds the predetermined value, "high detection" is constituted, when demodulation is failed even when the packet is detected and when the receiving power is equal to or smaller than the predetermined value, "low detection" is constituted, and when the packet is not detected, nondetect is constituted. The transmission slot selecting means selects the transmission slot based on the frame information.

Therefore, the invention can determine in details a possibility of making packets collide with each other by adding information of the receiving power to detect when reception is failed although the packet is detected and constituting the information by "high detection" and "low detection", can monitor in details a communication state, can transmit packets firmly by selecting an optimum transmission slot as a result thereof. Further, by interpreting "high detection" as collision of packets and interpreting "low detection" as simple packet error, when collision of packets is brought about, the transmission terminal can be urged to change the slot swiftly.

The communication terminal apparatus according to the invention preferably includes. slot occupation rate detecting means for detecting a slot occupation rate indicating a rate of the slots occupied within the frame based on the packet received by the packet receiving means, controlling means for controlling an occupied slot number per a frame time period of transmitting by the controlling means itself and a transmission rate of the data in accordance with the occupied slot number based on the slot occupation rate detected by the slot occupation rate detecting means, and packet transmitting means for transmitting the packet in accordance with the occupied slot number and the transmission rate controlled by the controlling means.

The communication terminal apparatus broadcasts data between one or more of surrounding-terminals and the communication terminal apparatus. The data subjects the frame repeated by the predetermined period to time division by the plurality of slots and is transmitted by the unit of the slot. The occupied slot of the data packet is determined in accordance with the transmission rate of the data. That is, when the data transmission rate is high, 1 packet occupies 1 slot. As the data transmission rate is reduced, the occupied slot number of 1 packet is increased.

The packet receiving means receives the packet transmitted by the surrounding-terminal. The slot occupation rate detecting means detects the slot occupation rate indicating the rate of the slots occupied within the frame based on the received packet. Here, the occupied slot is not limited to that when the data of the slot can correctly be received but also includes the slot in which presence of the packet is detected even when the data is not correctly received.

The controlling means controls the occupied slot number per the frame time period for transmitting by its own and the transmission rate of the data in accordance with the occupied slot number based on the slot occupation rate detected by the slot occupation rate detecting means. That is, the respective terminals increase or reduce the occupied slot numbers in accordance with the current slot occupation rate and the transmission rate is controlled in correspondence therewith.

Therefore, the communication terminal apparatus stabilizes the frame occupation rate per the unit time period in a total of the system by increasing or decreasing the slot number per the frame time period used for transmission by its own based on the slot occupation rate and controlling the transmission rate in accordance therewith, and therefore, can guarantee that the respective terminals transmit the data by the predetermined period.

### Advantage of the Invention

The terminal apparatus according to the invention can firmly carry out intercommunication between terminals even when the link of the network is not stabilized.

The communication terminal apparatus according to the invention can guarantee that the respective terminals transmit the data by the predetermined period by controlling the occupied slot number per the frame time period of transmitting by its own and the transmission rate of the data in accordance with the occupied slot number based on the detected slot occupation rate when the communication terminal apparatus subjects the frame repeated by the predetermined period with one or more of surrounding-terminals to time division by the plurality of slots and broadcasts the data by the unit of the slot and the communication terminal apparatus.

### Brief Description of the Drawings

[Fig. 1] Fig. 1 is a block diagram showing a constitution of a wireless terminal apparatus of a wireless communication network according to a first embodiment of the invention.
[Fig. 2] Fig. 2 is a view showing a constitution of a frame transmitted and received by a wireless terminal apparatus.
[Fig. 3] Fig. 3 is a view for explaining a slot control algorism of a slot selecting portion.
[Fig. 4] Fig. 4 is a view showing other wireless terminal apparatus capable of being detected by a wireless terminal apparatus itself of a background art.
[Fig. 5] Fig. 5 is a view showing other wireless terminal apparatus capable of being detected indirectly by a wireless terminal apparatus of a second embodiment.
[Fig. 6] Fig. 6 is a view for explaining that a new wireless terminal apparatus joins a wireless communication network.
[Fig. 7] Fig. 7 is a view for explaining a slot control algorism of a slot selecting portion according to a third embodiment.
[Fig. 8] Fig. 8 is a block diagram showing a constitution of a wireless terminal apparatus according to an embodiment of the invention.
[Fig. 9] Fig. 9 is a view showing a constitution of a frame transmitted and received by a wireless terminal apparatus.
[Fig. 10] Fig. 10 is a view showing a constitution of a packet.
[Fig. 11] Fig. 11 is a diagram showing contents of respective modulation systems rectified in IEEE802.11a.
[Fig. 12] Fig. 12 is a flowchart showing a control routine of a transmission rate by a slot occupying rate and the number of occupied slots.
[Fig. 13] Fig. 13 is a view showing a first traffic situation of a moving member mounted with a wireless terminal apparatus.
[Fig. 14A] Fig. 14A shows an example of an occupied slot detected by a moving member A.
[Fig. 14B] Fig. 14B is a view showing an example of an occupied slots detected by the moving member A.
[Fig. 15] Fig. 15 is a flowchart showing a control routine of a slot occupying rate and a transmission rate and the number of occupied slots by the number of terminals establishing communication.
[Fig. 16] Fig. 16 is a flowchart showing a control routine of a slot occupying rate and other transmission rate and other number of occupied slots by the number of terminals establishing communication.
[Fig. 17] Fig. 17 is a view showing a second traffic situation of a moving member mounted with a wireless terminal apparatus.
[Fig. 18] Fig. 18 is a flowchart showing a control routine of a slot occupying rate and a transmission rate and the number of occupied slots by receiving power.
[Fig. 19] Fig. 19 is a view showing a third traffic situation of a moving member mounted with a wireless terminal apparatus.
[Fig. 20] Fig. 20 is a flowchart showing a control routine of a slot occupying rate and a transmission rate and the number of occupied slots in consideration of a communication state.
[Fig. 21] Fig. 21 is a view showing determination rules of step S8 and step S9 mentioned later.
[Fig. 22] Fig. 22 is a flowchart showing a control routine of a transmission rate and the number of occupied slots.
[Fig. 23] Fig. 23 is a view showing a state in which one piece of a moving member mounted with a wireless terminal apparatus occupies slots excessively.
[Fig. 24] Fig. 24 is a flowchart showing a processing routine of making the number of occupied slots uniform.

### Best Mode for Carrying Out the Invention

Preferable embodiments of the invention will be explained in details in reference to the drawings as follows. Further, an explanation will be given by attaching the same notations at the same portions of respective embodiments.

### [First embodiment]

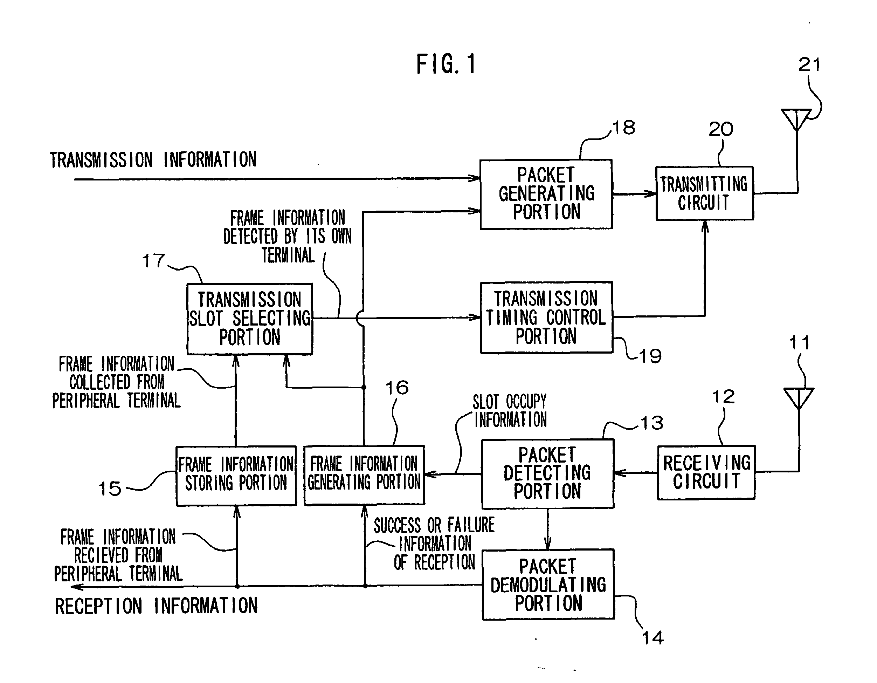

Fig. 1 is a block diagram showing a constitution of a wireless terminal apparatus of a wireless communication network according to a first embodiment of the invention. The wireless terminal apparatus is mounted to, for example, a moving member and intercommunicates with a wireless terminal apparatus mounted to other moving member (hereinafter, referred to as "surrounding-terminal") by broadcasting a packet thereto. Further, the wireless communication network is dynamically constituted by broadcasting respective packets by respective wireless terminal apparatus.

The wireless terminal includes a receiving circuit 12 for receiving a packet transmitted by other wireless terminal apparatus by way of a receiving antenna 11, a packet detecting portion 13 for detecting which slot is used for transmitting a received packet, a demodulating portion 14 for recovering a data transmitted from a detected packet, a frame information storing portion 15 for storing frame information thereof by an amount of 1 frame period by extracting the frame information from a demodulated data, a frame information generating portion 16 for generating the frame information embedded to a transmitting packet based on occupation information of a slot detected at one' s own terminal detected by the packet detecting portion 13 and success or failure of the demodulation at the packet demodulating portion 14, and a transmission slot selecting portion 17 for selecting a transmission slot based on a plurarity of pieces of frame information for one frame period collected from the respective surrounding-terminals the frame information detected at one's own terminal.

The wireless terminal apparatus further includes a packet generating portion 18 for generating a packet, a transmission control portion 19 for controlling a transmission timing of a packet, and a transmitting circuit 20 for transmitting a packet by way of a transmitting antenna 20.

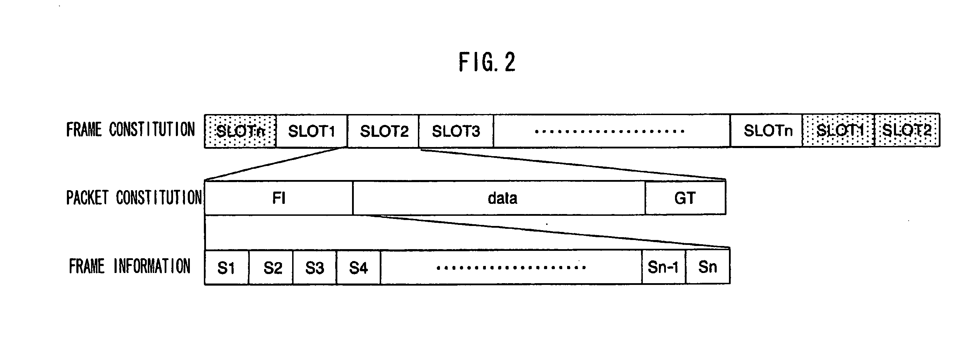

Fig. 2 shows a view showing a constitution of a frame transmitted and received by a wireless terminal apparatus. 1 frame is constituted by n piece of slots set to, for example, 100 ms and subjected to time division. 1 slot is a time period capable of transmitting 1 packet by a wireless terminal apparatus. Further, it is assumed that respective wireless terminal apparatus exchange transmitting data per slot units. A period of 1 frame may be set in accordance with a data transmitting period of each terminal. For example, each terminal may be set to 100 ms in order to guarantee transmission once per 100 ms.

A packet includes frame information (FI) indicating a communication state of each slot in 1 frame, a data constituting an object of transmission and guard time (GT) for alleviating an influence of a shift in synchronization of a slot. Further, although according to the invention, a method of synchronizing a slot is not limited, it is assumed that synchronization to a degree of capable of being compensated for by guard time is established by some means by, for example, providing a reference station for synchronization or the like.

According to the first embodiment, frame information indicates an occupation state of each slot and there are two of "busy" and "free". "Busy" indicates that reception of a packet has succeeded. Further, success of reception of a packet signifies that not only a packet is received and detected but also information within the packet can be recovered. "Free" indicates that reception of a packet is has not succeeded (for example, a packet is not detected, packets collide or the like) in a slot constituting an object.

The wireless terminal apparatus of the wireless communication network constituted as described above is operated as follows when a packet transmitted from other wireless terminal apparatus is received.

The packet detecting portion 13 detects by which slot a packet is transmitted based on time of receiving the packet received by the receiving circuit 12. The packet demodulating portion 14 demodulates the detected packet to recover a data transmitted from each surrounding-terminal. The frame information storing portion 15 takes out frame information [S1, S2, ..., Sn] from demodulated data and stores respective frame information of an amount of 1 frame time transmitted from a plurality of terminals. The frame information generating portion 16 respectively generates "busy" for predetermined slots and "free" for other predetermined slots.

The transmitting slot selecting portion 17 selects a slot detected by the wireless terminal apparatus itself for transmission by using a plurality of pieces of frame information provided from respective surrounding-terminals by communication in the frame information storing portion 15 and frame information detected by the wireless terminal apparatus itself from the frame information generating portion 16.

Specifically, the transmitting slot selecting portion 17 determines as follows with respect to a transmission slot to which a packet is transmitted by the wireless terminal apparatus. When even one piece of frame information from the frame information storing portion 15 indicating that the transmission slot is "busy" is present, the transmission slot selecting portion 17 determines that the transmission slot is reserved by the wireless terminal apparatus and tries transmission by using the same slot even in a next frame. Further, when all of frame information from the frame information storing portion 15 indicates that the transmission slot is "free", the transmission slot selecting portion 17 determines that collision of packets is brought about and tries transmission by selecting other vacant slot as a new transmission slot in a next frame.

The transmission slot selecting portion 17 determines a slot other than the transmission slot as follows based on both of frame information from respective surrounding-terminals collected by the frame information storing portion 15 and frame information based on a detection result of the wireless terminal apparatus itself generated by the frame information generating portion 16. With respect to a slot indicating that at least one piece of frame information is "busy", the transmission slot selecting portion 17 determines that the slot is occupied by other wireless terminal apparatus and prohibits use of the slot. With respect to a slot indicated as free by all of pieces of frame information, the transmission slot selecting portion 17 determines the slot is vacant slot (which is not occupied by any of wireless terminal apparatus).

The packet generating portion 18 generates a packet embedded with transmission information and frame information generated by the frame information generating portion 16. The transmission timing control portion 19 controls the transmitting circuit 20 to transmit a packet at a timing of a slot selected by the transmission slot selecting portion 17. The transmitting circuit 20 broadcasts a packet generated by the packet generating portion 18 by way of the transmitting antenna 20 in accordance with a control timing of the transmitting circuit 20.

However, in the case of the above-described constitution, there poses a problem that even when a "free" slot is detected by frame information, there are a case in which the slot is a vacant slot and a case in which collision of packets is brought about at the slot, which cannot be differentiated from each other. Hence, according to the first embodiment, the transmission slot selecting portion 17 caries out the following processing.

The transmission slot selecting portion 17 maintains a transmission slot with respect to a transmission slot to which a packet is transmitted by the wireless terminal apparatus until "free" is detected continuously by twice from the same wireless terminal apparatus, and determines that collision of packets is brought about at the transmission slot when "free" is detected continuously by three times and changes the transmission slot to other vacant slot.

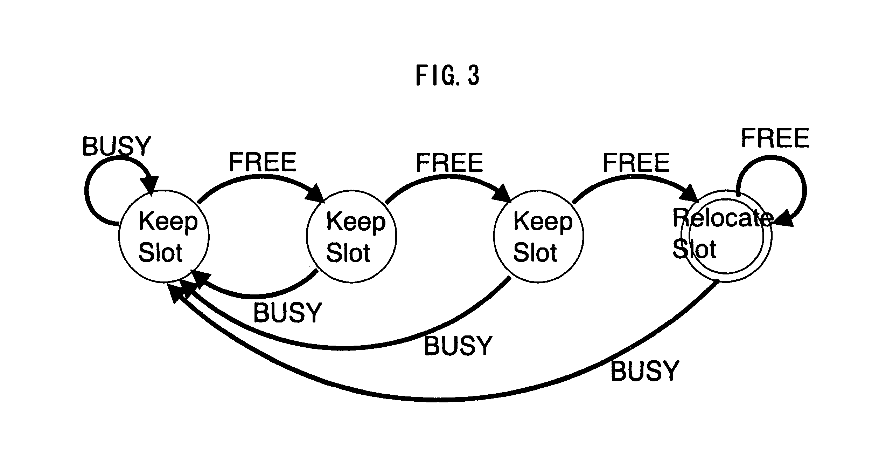

Fig. 3 is a view for explaining a slot control algorism of the transmission slot selecting portion 17. When "busy" is detected from a packet provided from any one peripheral wireless terminal apparatus, a transmission slot thereof is maintained (Keep Slot). Further, even "free" is detected continuously by twice from the same wireless terminal apparatus, the transmission slot is maintained. Further, when "free" is detected continuously by three times, the transmission slot is changed to other slot (Relocate Slot). The reason is that a failure in receiving a packet is hardly continued by the predetermined number of times and a possibility that packets collide is very high.

The number of times of continuously detecting "free" until changing a slot may arbitrarily be set. When a communication situation is comparatively stabilized, the transmitting slot may be changed by receiving "free" at a second time, and when the communication situation is unstabilized, the slot may be changed by continuously receiving "free" by 4 times or more.

Further, the transmission slot selecting portion 17 may change a transmission slot by determining that collision of packets is brought about even when "free" is detected with respect to the transmission slot from a predetermined number or more of packets (transmission terminals).

As described above, when a packet is transmitted by using a certain transmission slot, thereafter, "free" is received continuously by a predetermined number of times from the same wireless terminal apparatus with respect to the transmission slot from the received packet, the wireless terminal apparatus according to the first embodiment determines that collision of packets is brought about at the transmission slot and changes the transmission slot to other vacant slot. Thereby, it can firmly be determined whether reception of a packet has failed or collision of packets is brought about, and therefore, a slot can efficiently be used.

### [Second embodiment]

Next, a second embodiment of the invention will be explained. A terminal apparatus according to the second embodiment is constituted similar to that of Fig. 1. According to the second embodiment, frame information different from that of the first embodiment is used.

According to the second embodiment, frame information indicates a packet receiving situation of each slot and there are two of DET (detect information) and NDET (nondetect information). DET indicates that a packet is detected (regardless of success or failure of reception) in a slot constituting an object. Therefore, DET includes a case in which collision of packets is brought about and reception is failed at a certain slot. NDET indicates that a packet is not detected.

The transmission slot selecting portion 17 selects a slot used for transmission based on frame information from a surrounding-terminal collected by the slot information storing portion 15 and frame information detected by the wireless terminal apparatus itself generated by the frame information generating portion 16.

When even one slot of DET is present in all of frame information from the frame information storing portion 15, the transmission slot selecting portion 17 determines that the slot is occupied by other wireless terminal apparatus and prohibits the slot from being selected. When there is a slot indicating NDET in all of frame information from the slot information storing portion 15, the transmission slot selecting portion 17 determines that the slot is a vacant slot (which is not occupied by any of wireless terminal apparatus).

Further, the frame information generating portion 16 generates DET with respect to a slot at which a packet is detected regardless of success or failure of reception and generates NDET with respect to a slot at which a packet is not detected. The packet generating portion 18 embeds the frame information to a packet and the transmitting circuit 20 broadcasts the packet generated by the packet generating portion 18.

As described above, even when collision of packets is brought about, the wireless terminal apparatus according to the second embodiment determines that the slot is occupied, and therefore, can accurately determine presence/absence of occupation of the slot. Thereby, when collision is not brought about at an initial access, thereafter, the slot is occupied, and therefore, access can be made without collision. As a result, collision of the packet can be restrained from being brought about in the initial access. Further, the wireless terminal apparatus can monitor a packet detecting situation of other wireless terminal apparatus present at a periphery thereof.

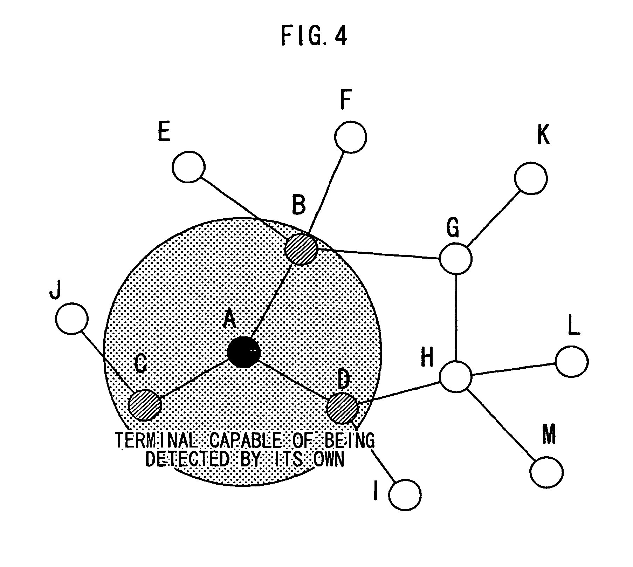

Fig. 4 is a view showing other wireless terminal apparatus capable of being detected by a wireless terminal apparatus A itself of a background art. In the background art, the wireless terminal apparatus A can only monitor a packet (occupied slot) of wireless terminal apparatus B, C, D present at a periphery thereof.

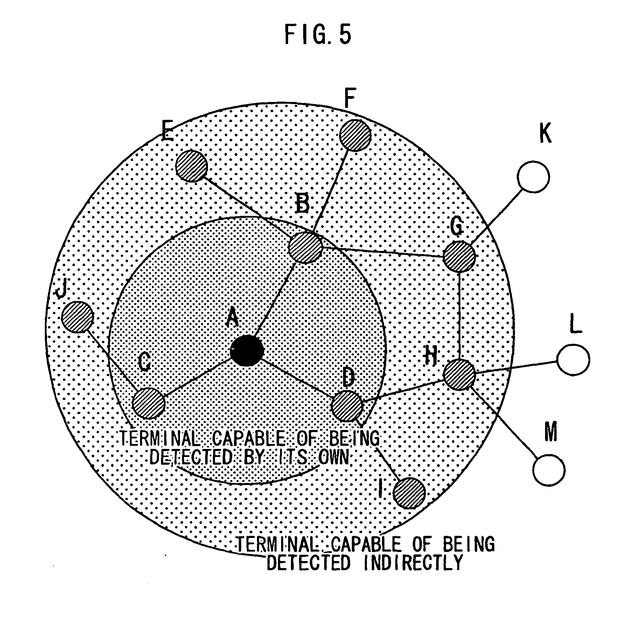

Fig. 5 is a view showing other wireless terminal apparatus capable of being indirectly detected by a wireless terminal apparatus A according to the second embodiment. A wireless terminal apparatus B detects an occupied slot of wireless terminal apparatus E, F, G and transmits a packet including a detection result thereof to the wireless terminal apparatus A. A wireless terminal apparatus C detects an occupied slot of a wireless terminal apparatus J and transmits a packet including a detection result thereof to the wireless terminal apparatus A. A wireless terminal apparatus D detects an occupied slot of wireless terminal apparatus G, H, I and transmits a packet including a detection result thereof to the wireless terminal apparatus A. Thereby, the wireless terminal apparatus A can not only monitor directly the occupied slot of the wireless terminal apparatus B through D but also can monitor indirectly the occupied slot of E through J.

This is equivalent to that the wireless terminal apparatus A indirectly carries out carrier sense up to 2 hops forward. As a result, a vacant slot can be detected in a broad range and collision with a packet by a wireless terminal apparatus joining in the wireless communication network newly can considerably be reduced.

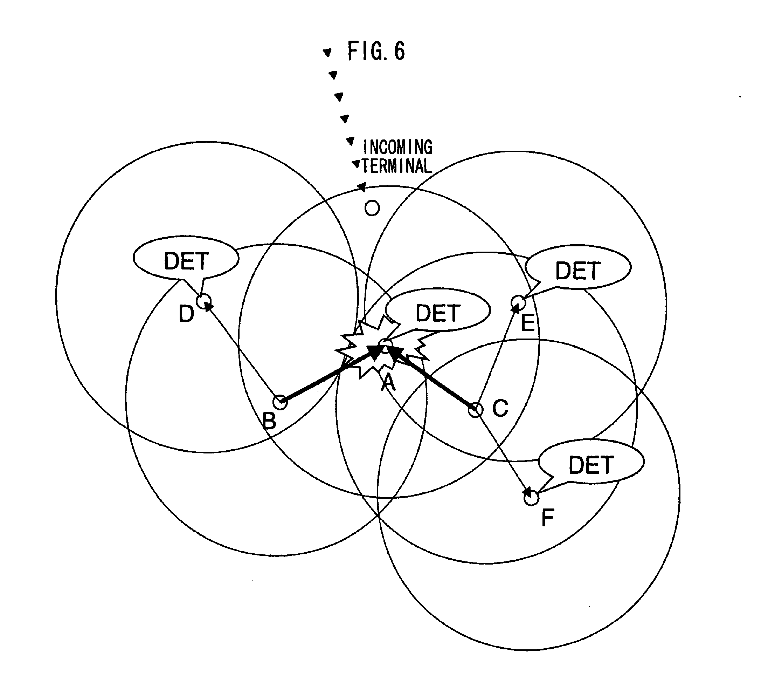

Fig. 6 is a view for explaining that a new wireless terminal apparatus (Incoming Terminal) joins the wireless communication network. Here, packets of the wireless terminal apparatus B and C collide with each other. Although the wireless terminal apparatus A does not succeed in receiving the packets from the wireless terminal apparatus B and C, presence of the packets is detected thereby, and therefore, a packet including DET is broadcasted thereby. Although the wireless terminal apparatus D, E, F do not directly detect collision of packets, the wireless terminal apparatus D, E, F broadcast packets including DET by a packet from the wireless terminal apparatus A.

Although a new wireless terminal apparatus can be informed of the slot at which collision is brought about when the new wireless terminal apparatus is disposed at a position of capable of receiving at least a packet from the wireless terminal apparatus A as shown by Fig. 6, and therefore, the new wireless terminal apparatus can select other slot by prohibiting use of the slot.

### [Third embodiment]

Next, a third embodiment of the invention will be explained. A terminal apparatus according to the third embodiment is constituted similar to that of Fig. 1. Although according to the first and the second embodiments, 2 values of frame information are used, according to the third embodiment, 3 values of frame information are used.

According to the third embodiment, frame information is three of RESERVED, DET, NDET. RESERVED indicates that a packet is correctly received (a packet is detected and a data is recovered) in a slot constituting an object. DET indicates that although a packet is detected, a data cannot be recovered at a slot constituting an object. NDET indicates that a packet is not detected at a slot constituting an object.

The transmission slot selecting portion 17 selects a transmission slot used for transmission based on frame information of the frame information storing portion 15 and frame information generated by the frame information generating portion 16 based on a detection result of the wireless terminal apparatus itself.

Specifically, the transmission slot selecting portion 17 determined as follows with respect to a transmission slot to which a packet is transmitted by the wireless terminal apparatus when slot occupation information provided from a wireless terminal apparatus of a periphery is constituted by a single one thereof. When only "reserved" is detected from all of packets detected, transmission of the packet of the transmitting slot is succeeded and the transmission slot is maintained at a frame thereafter. Further, when DET is detected from all of packets detected, the transmission slot selecting portion 17 determines that collision of packets is brought about and changes the transmission slot to other vacant slot at a frame thereafter.

Further, when there are a predetermined number or more of terminals at a periphery thereof, in a case of detecting NDET from all of packets detected, the transmission slot selecting portion 17 determines a failure (case 1). This is a situation in which although a packet transmitted by the wireless terminal apparatus is not detected by a wireless terminal apparatus at a periphery thereof, the wireless terminal apparatus can detect a packet from a terminal of the periphery. Normally, "reserved" or DET is to be detected with respect to a transmission slot of the wireless terminal apparatus itself, and therefore, it is determined that a failure is brought about under such a situation.

The transmission slot selecting portion 17 controls as follows when reserved, DET, NDET are mixedly detected for a transmission slot from a detected packet.

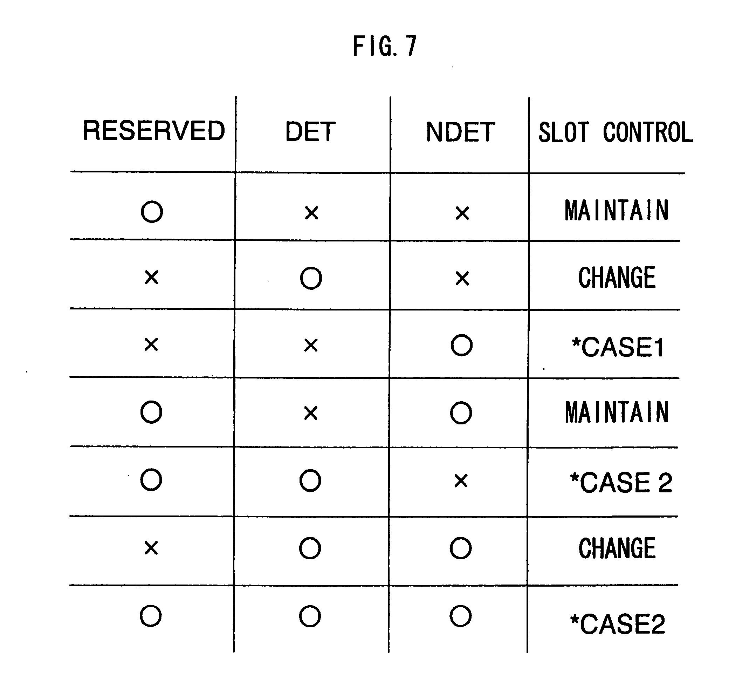

Fig. 7 is a diagram for explaining a slot control algorism of the transmission slot selecting portion 17 according to the third embodiment.

When only reserved is detected and DET and NDET are not detected, the transmission slot is maintained. When only DET is detected, and reserved and NDET are not detected, the transmission slot is changed to other vacant slot.

When reserved and NDET are detected and DET is not detected, the transmission slot is maintained. When DET and NDET are detected and reserved is not detected, the transmission slot is changed to other vacant slot.

When reserved and DET is detected and NDET is not detected (case 2), and when reserved and DET and NDET are respectively detected (case 2), the transmission slot is selected as follows.

When band guarantee (slot ensuring) is predominant, the transmission slot is maintained. When an access number is small, the transmission slot is maintained and even at other vacant slot, transmission of the packet is tried. Further, a slot may be changed at a stage of preserving other vacant slot.

When avoidance of collision is predominant, the transmission slot is changed. In a case of a small access number, a probability of bringing about collision by changing a slot is low, and therefore, the case is effective. In a case of a large access number, a probability of newly bringing about collision by the change becomes high, and therefore, the case does not necessarily amounts to avoidance of collision.

On the other hand, the transmission slot selecting portion 17 determines as follows with respect to other than a transmission slot to which a packet is transmitted by the wireless terminal apparatus. When there is even one slot constituting reserved or DET from all of packets detected, the transmission slot selecting portion 17 determines that the slot is occupied by other wireless terminal apparatus and prohibits use of the slot. Further, when there is the slot constituting NDET in all of packets detected, the transmission slot selecting portion 17 determines the slot as a vacant slot (which is not occupied by any wireless terminal apparatus).

As described above, the wireless terminal apparatus according to the third embodiment can monitor a communication state of a transmission slot and other slot respectively in details by combining information of reserved, DET, NDET detected from a packet and can change the transmission slot as necessary.

Further, the transmission slot selecting portion 17 may determine as follows.

When there are slots at which reserved, DET are respectively detected from all of packets detected, the transmission slot selecting portion 17 may select a transmission slot after confirming a situation of the number of a predetermined frame. Specifically, when the number of detecting reserved is reduced and the number of detecting DET is increased, the transmission slot selecting portion 17 determines that collision of packets is brought about at the slot and changes the transmission slot. On the other hand, when the number of detecting reserved is increased and the number of detecting DET is reduced, the transmission slot selecting portion 17 determines that a simple error is generated and maintains the transmission slot. The simple error is reduced in accordance with an elapse of time, and therefore, presence/absence of bringing about error can firmly be determined by taking a number of detecting reserved and changes in the number of detecting DET over time into consideration.

Further, when DET is detected continuously by a predetermined number of times or more from a packet from the same wireless terminal apparatus with respect to a transmission slot of the wireless terminal apparatus itself, the transmission slot selecting portion 17 changes the slot to other vacant slot. Because when DET is continuously detected, a possibility of bringing about collision of packets is high.

Further, the transmission slot detecting portion 17 may determine that a simple error is brought about with respect to a transmission slot of the wireless terminal apparatus itself when reserved is detected or DET is detected from a packet of the same wireless terminal apparatus.

### [Fourth embodiment]

Next, a fourth embodiment of the invention will be explained. A terminal apparatus according to the fourth embodiment is constituted similar to that of Fig. 1. According to the fourth embodiment, 4 values of frame information are used.

According to the fourth embodiment, in frame information, there are four of RESERVED, H_DET ("high detection" information), L_DET (low detection information), NDET. Further, reserved and NDET are the same as those of the third embodiment.

H_DET indicates that a packet having a large receiving power is detected, and a data is not recovered. L_DET indicates that a packet having a small receiving power is detected, and a data is not recovered.

The transmission slot selecting portion 17 selects a transmission slot used for transmission based on the frame information storing portion 15 and frame information generated by the frame information generating portion 16 based on a detection result of the wireless terminal apparatus itself.

The transmission slot selecting portion 17 determines as follows with respect to a transmission slot to which a packet is transmitted by the wireless terminal apparatus.

The transmission slot selecting portion 17 determines that collision of packets is brought about at a transmission slot when H_DET is detected from the detected packet and changes the transmission slot at a next frame. Although when the receiving power is large, normally, a probability of correct reception without error is high, the reception is failed even thereby because a possibility of bringing about collision of packets is high in the transmission slot.

Further, when L_DET is detected from the detected packet, the transmission slot selecting portion 17 determines that a simple error is brought about and maintains the transmission slot at a next frame. When the receiving power is small, a probability of bringing about an error is high and in a case of simple error, a probability of eliminating the error at the next frame is high.

Further, when H_DET and L_DET are mixedly detected from respective packets detected, the transmission slot selecting portion 17 predominantly detects H_DET. That is, the transmission slot selecting portion 17 determines that collision of packets is brought about at the transmission slot and changes the transmission slot at a next frame.

As described above, the wireless terminal apparatus according to the fourth embodiment can determine whether collision of packets is brought about or a simple error is brought about in accordance with a magnitude of the power of the packet when reception of the packet has failed, and therefore, a processing in a time direction of confirming several frames is dispensed with, and therefore, the apparatus can swiftly transmit the packet by determining presence/absence of the transmission slot without delay.

Further, the transmission slot selecting portion 17 may detect information from a packet over a plurality of number of frames in order to further ensure a determination of whether collision of packets is brought about or a simple error is brought about.

Specifically, when H_DET is detected continuously by a predetermined number of times with respect to a transmission slot from respective packets detected, the transmission slot selecting portion 17 may change a transmission slot by determining that collision of packets is brought about. Thereby, in comparison with the case of changing a transmission slot by detecting H_DET only by once, an accuracy of determining collision of packets is brought about can be promoted.

Further, the invention is not limited to the above-described embodiments but is naturally applicable also to those changed in view of design within in the range described in the scope of claims. For example, although according to the above-described respective embodiments, an explanation has been given by taking an example of the wireless communication network, the invention is not limited thereto so far as a link of a network is dynamically changed.

### [Fifth embodiment]

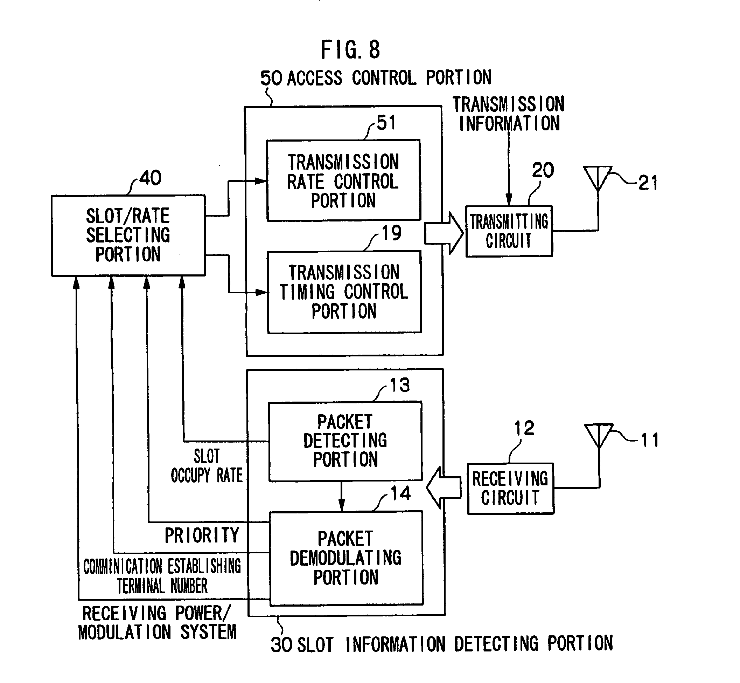

Fig. 8 is a block diagram showing a constitution of a wireless terminal apparatus according to a fifth embodiment.

The wireless terminal apparatus includes the receiving circuit 12 for receiving a packet transmitted by other wireless terminal apparatus by way of the receiving antenna 11, a slot information detecting portion 30 for detecting slot information from a received packet, a slot/rate selecting portion 40 for selecting an increase or a reduction of a slot occupied by the apparatus itself based on slot information, a transmission rate or the like, an access control portion 50 for controlling access to constitute the number of slots and a transmission rate selected by the slot/rate selecting portion 40, and a transmitting circuit 20 for transmitting a packet by way of a transmitting antenna 21 based on a transmission timing, or a transmission rate from the access control portion 50.

The receiving circuit 12 supplies a packet received by way of the receiving antenna 11 to the slot information detecting portion 30. The slot information detecting portion 30 is constituted as follows for detecting slot information from a received packet.

The slot information detecting portion 30 includes a packet detecting portion 13 for detecting a packet timing of which slot is used in 1 frame time period for transmitting a packet received by the receiving circuit 12, and a packet demodulating portion 14 for recovering an original data from a detected packet.

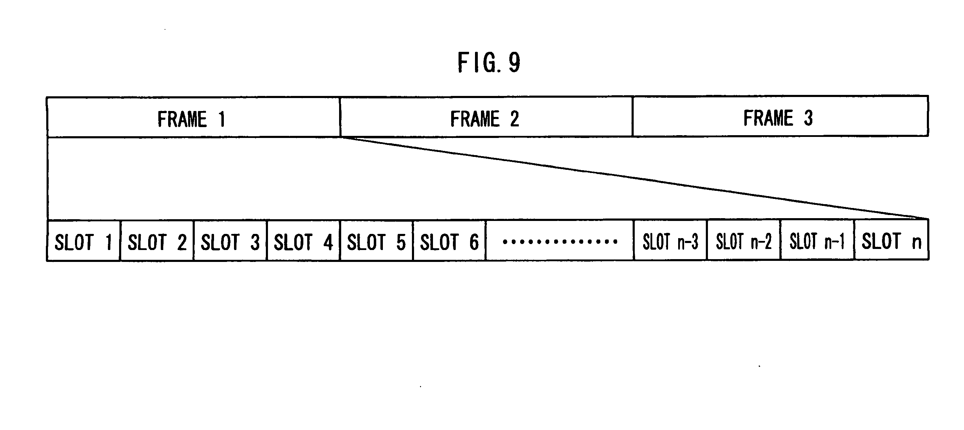

Fig. 9 is a view showing a constitution of a frame transmitted and received by a wireless terminal apparatus. 1 frame is set to, for example, 100 ms and is constituted by n pieces of slots subjected to time division. Each wireless terminal apparatus carries out time division access by a unit of a slot. Specifically, each wireless terminal apparatus selects one or a plurality of vacant slots in n pieces of slots in a frame and transmits a packet at a timing of a selected slot. Further, a period of 1 frame may be set in accordance with a data transmitting period of each terminal. For example, the period may be set to 100 ms in order that each terminal guarantees transmission of once per 100 ms.

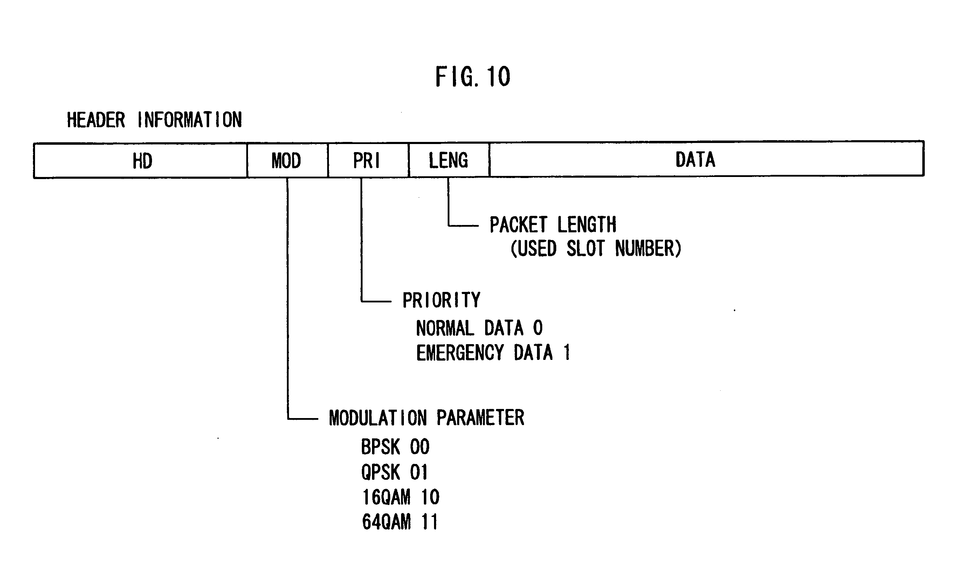

Fig. 10 is a view showing a constitution of a packet. A packet includes header information (HD) including information of identifying a transmission source or the like, modulation parameter information (MOD) indicating a modulation parameter, priority information (PRI) indicating a priority of the packet, packet length information (LENG) indicating the number of slots used by the wireless terminal apparatus in 1 frame time period, and a data (DATA).

A data in a packet is modulated by a modulation system indicated by the modulation parameter information. The modulation parameter information is constituted by, for example, 2 bits, specifically, "00" indicates BPSK, "01" indicates QPSK, "10" indicates 16QAM, "11" indicates 64QAM. The priority information is constituted by, for example, 1 bit, "0" indicates a normal data, "1" indicates an emergency data.

The packet detecting portion 13 detects packet timings for all of packets received by the receiving circuit 12, calculates a rate of a slot occupied in 1 frame time period (hereinafter, referred to as "slot occupation rate", and supplies a calculated slot occupation rate to the slot/rate selecting portion 40.

The packet demodulating portion 14 analyzes the packet received by the receiving circuit 12, detects a modulation system from modulation parameter information of the packet, and recovers a data by demodulating the data in consideration of the modulation system. Further, the packet demodulating portion 14 extracts priority information of the relevent packet from the packet.

Further, the packet demodulating portion 14 respectively counts packets which can correctly receive data in 1 frame time period and packets which cannot correctly receive data although the packet demodulating portion 14 can detect presence of the packets. Further, the packet demodulating portion 14 detects a number of surrounding-terminals establishing communication with the wireless terminal apparatus (hereinafter, referred to as "communication establishing terminal number") by using the header information and the packet length information of each packet. Further, the packet demodulating portion 14 also detects a receiving power,of a packet. Further, the packet demodulating portion 14 supplies a priority, a receiving power, a modulation system, and a current communication establishing terminal number for each packet received to the slot/rate selecting portion 40.

The slot/rate selecting portion 40 selects an occupied slot number and a transmission rate by using a total or a portion of information (slot occupation rate, priority, receiving power, modulation system, communication establishing terminal number) supplied from the slot information detecting portion 30.

The access control portion 50 includes a transmission rate control portion 51 for controlling a transmission rate (modulation system) to be a transmission rate selected by the slot/rate selecting portion 40, and a transmission timing control portion 19 for controlling a transmission timing of a packet. In order to control a transmission rate, a modulation system may be changed as follows.

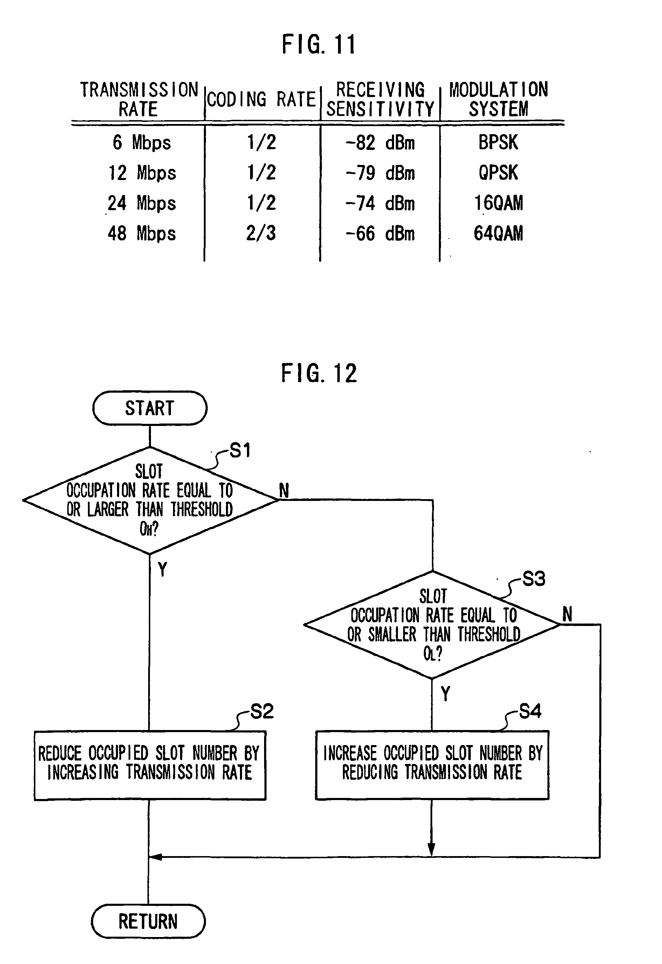

Fig. 11 is a diagram showing a content of respective modulation systems rectified by IEEE802.11a. As shown by the drawing, there is a correlative relationship among a modulation system, a transmission rate and a receiving sensitivity. For example, a transmission rate becomes high in an order of respective modulation systems of BPSK, QPSK, 16QAM, 64QAM. Further, the receiving sensitivity becomes excellent in an order of respective modulation systems of 64QAM, 16QAM, QPSK, BPSK. Further, BPSK, QPSK, 16QAM are provided with a coding rate of 1/2 and 64QAM is provided with a coding rate of 2/3. In the following, an explanation will be given by taking an example of controlling a transmission rate by controlling a modulation system.

The transmission circuit 20 modulates transmission information by a transmission rate (modulation system) controlled by the transmission rate control portion 51. Further, the transmitting circuit 20 broadcasts a packet including a modulated data to a surrounding-terminal by way of the transmitting antenna 21 in accordance with a transmission timing controlled by the transmission timing control portion 19.

The wireless terminal apparatus constituted as described above controls a transmission rate and the number of slots occupied by 1 frame time period (occupied slot number) as follows. According to the embodiment, an explanation will be given by taking an example of a wireless terminal apparatus of transmitting one packet by occupying 2 slots by QPSK (12 Mbps).

Fig. 12 is a flowchart showing a control routine of a transmission rate by a slot occupation rate and an occupied slot number.

At step S1, the slot/rate selecting portion 40 determines whether the slot occupation rate detected by the packet detecting portion 13 is equal to or larger than a threshold O_{H}. The threshold O_{H} indicates a lower limit value of a slot occupation rate which is regarded such that a number of slots occupied is large and the network is congested. Therefore, the slot/rate selecting portion 40 proceeds to a processing of step S2 since in affirmative determination, a terminal density is high and a network is brought into a congested state, and proceeds to a processing of step S3 in negative determination.

At step S2, the slot/rate selecting portion 40 increases a transmission rate for reducing the number of occupied slots used by the apparatus itself for transmission. According to the embodiment, the slot/rate selecting portion 40 selects to reduce the occupied slot number from 2 to 1 by increasing the transmission rate by changing the modulation system from current QPSK (12Mbps) to 16QAM (24Mbps). Further, the transmission rate control portion 51 controls the transmitting circuit 20 to constitute the selected modulation system, and the transmission timing control portion 19 controls the transmission timing of the transmitting circuit 20.

Thereby, the wireless terminal apparatus can maintain an amount of data transmitted in 1 frame time period by doubling the transmission rate although the slot number is reduced to a half. Further, when the modulation system becomes a multivalue modulation system (16QAM), the receiving sensitivity becomes -74 dBm from -79 dBm to be deteriorated by 5 dB, and therefore, a communicatable distance is multiplied by about 0.6 (a case of assuming free space propagation). However, on the other hand, also a distance from a contiguous terminal is reduced by increasing the terminal density, and therefore, a problem is not posed thereby.

On the other hand, step S3, the slot/rate selecting portion 40 determines whether the slot occupation rate is less than a threshold O_{L}. The threshold O_{L} indicates an upper limit value of the slot occupation rate in a state in which the number of occupied slots is small and there is an allowance in a network. Therefore, the slot/rate selecting portion 40 proceeds to a processing of step S4 in affirmative determination, finishes processings of the routine as it is in negative determination to return to start a processing of step S1.

At step S4, there is an allowance in slot, and therefore, the slot/rate selecting portion 40 gives predominance to establishing communication with a remoter terminal and selects to reduce the transmission rate by increasing an occupied slot number. According to the embodiment, the slot/rate selecting portion 40 selects to increase the occupied slot number from 2 to 4 by reducing the transmission rate by changing the modulation system from current QPSK (12 Mbps) to BPSK (6 Mbps).

Thereby, the wireless terminal apparatus doubles the occupied slot number although the transmission rate is halved and therefore, an amount of information of transmission data within in 1 frame time period can be maintained. Further, the receiving sensitivity is improved by 3 dB from -79 dBm to -82 dBm by reducing a number of modulation multivalue. Therefore, when free space propagation is assumed, the communication distance is multiplied by about 1.4, and therefore, the wireless terminal apparatus can transmit data to remoter surrounding-terminal.

As described above, the wireless terminal apparatus according to the fifth embodiment detects the slot occupation rate of 1 frame from a packet transmitted from a surrounding-terminal, when the slot occupation rate is equal to or larger than the threshold O_{H}, the terminal density becomes high and the network (slot) is congested, and therefore, the wireless terminal apparatus reduces a number of occupied slots of the wireless terminal apparatus itself and increases the transmission rate by switching to the multivalue modulation system. Thereby, network can be increased while maintaining an amount of transmission data within a unit time period. That is, chances of transmitting packets can be given equally to surrounding-terminals while maintaining a communicatable state.

Further, according to the wireless terminal apparatus, when the slot occupation rate is equal to or smaller than the threshold O_{L}, the terminal density is low and network (slot) is not congested, and therefore, the transmission rate is reduced by increasing the number of occupied slots of the wireless terminal apparatus itself and switching to the modulation system having a small modulation multivalue number. Thereby, data can be transmitted to a remoter terminal by increasing the receiving sensitivity by reducing the modulation multivalue number while maintaining the amount of transmission data within the unit time period. In this way, the wireless terminal apparatus controls a maximally communicatable distance by changing band allocation.

Further, although according to the embodiment, an explanation has been given by taking an example of changing the modulation system rectified by IEEE802.11a with respect to the method of controlling the transmission rate, the invention is not limited thereto. For example, when spread spectrum modulation is used, a spread rate may be changed, or a coding rate of an error correcting code may be changed. Further, a number of occupied slots of the wireless terminal apparatus itself is not naturally limited to 1, 2, 4 mentioned above.

### [Sixth embodiment]

Next, a sixth embodiment of the invention will be explained. Further, portions or processings the same as those of the above-described embodiments are attached with the same notations and a detailed explanation thereof will be omitted.

The wireless terminal apparatus according to the fifth embodiment gives chances of packet transmission equally to surrounding-terminals while maintaining a communication state by reducing the occupied slot number of the wireless terminal apparatus itself and increasing the transmission rate. However, there is also a possibility that communication with a surrounding-terminal is not established conversely by increasing the transmission rate.

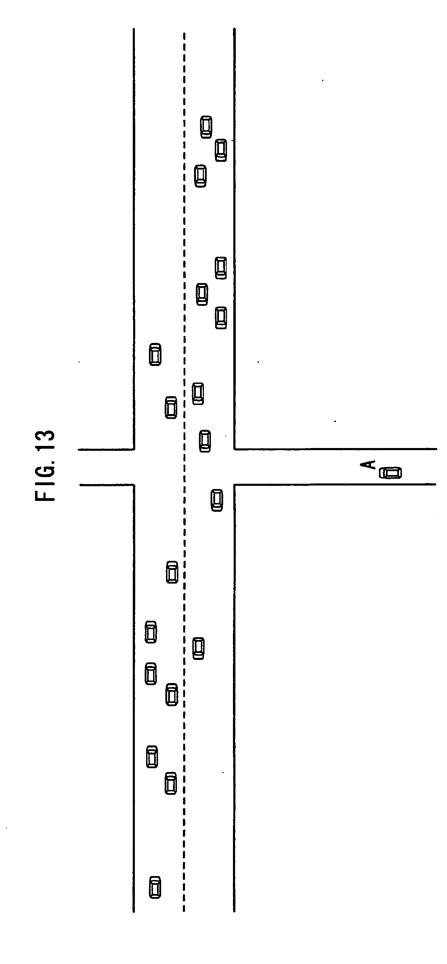

Fig. 13 is a view showing a first traffic situation of a moving member mounted with a wirless terminal apparatus. In Fig. 13, a moving member A is moved to a road having a heavy traffic amount. Although the moving member A can detect signals transmitted by a number of other moving members (surrounding-terminals), a sufficient receiving power is not provided, and data cannot be demodulated. Also in this case, it is necessary to ensure S/N without reducing the slot number in order to firmly carry out communication.

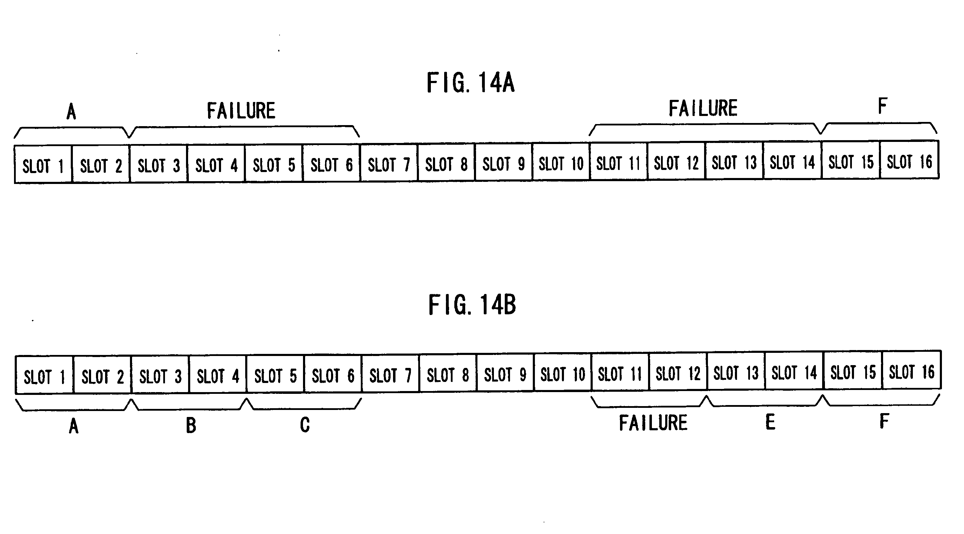

Fig. 14 is a view showing an example of an occupied slot detected by the moving member A shown in Fig. 13. Further, in Fig. 14A and Fig. 14B, the moving member A occupies slots 1, 2 and a slot occupation rate of 1 frame stays the same. However, a situation of receiving a packet differs as follows.

In a case of Fig. 14A, the moving member A cannot correctly receive packets at slots 3 through 6, 11 through 14 although presence thereof is detected thereby (reception failure), and correctly receives packets of a moving member F at slots 15, 16. In a case of Fig. 14B, the moving member A cannot correctly receive packets at slots 11, 12 although presence thereof is detected thereby. However, the moving member A correctly receives respective packets with respect to a moving member B at slots 3, 4, with respect to a moving member C at slots 5, 6, with respect to a moving member E at slots 13, 14 and with respect to a moving member F at slots 15, 16.

In the case of Fig. 14A, the moving member A establishes communication only with the moving member F, and therefore, it is not preferable to increase the transmission rate by reducing a number of occupied slots of the wireless terminal apparatus itself. In the case of Fig. 14B, the moving member A establishes communication with the moving members B, C, E, F, and therefore, there is a high possibility that communicatable terminals are present even when the number of occupied slots of its own is reduced.

Hence, the wireless terminal apparatus according to the sixth embodiment controls a transmission rate and a number of occupied slots of its own based not only on the slot occupation rate but also on the number of surrounding-terminals establishing communication (hereinafter, referred to as "communication establishing terminal number").

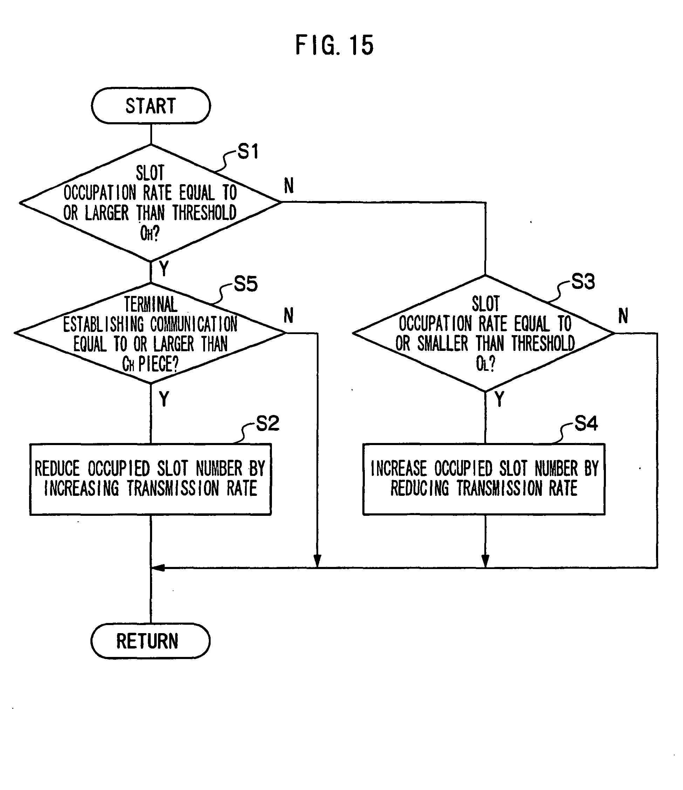

Fig. 15 is a flowchart showing a control routine of the transmission rate and the occupied slot number by the slot occupation rate and the communication establishing terminal number. The control routine of Fig. 15 adds step S5 to the control routine of Fig. 12. That is, when the slot occupation rate is equal to or larger than the threshold O_{H} at step S1, the slot/rate selecting portion 40 proceeds to a processing of step S5.

At step S5, the slot/rate selecting portion 40 determines whether the communication establishing terminal number is equal to or larger than C_{H} piece. C_{H} piece is a lower limit value of a number by which the communication establishing terminal number is conceived to be large. Further, the slot/rate selecting portion 40 proceeds to a processing of step S2 in affirmative determination and finishes the routine to return to start the processing of step S1 again by finishing the routine in a case of negative determination.

Therefore, the slot/rate selecting portion 40 selects to increase the transmission rate and reduce the occupied slot number of the wireless terminal apparatus itself when the occupation rate is high and the communication establishing terminal number is large. That is, the slot/rate selecting portion 40 reduces the occupied slot number of the wireless terminal apparatus itself to vacate a network when a state of communication with the surrounding-terminal is excellent. Further, the slot/rate selecting portion 40 may execute the following control routine.

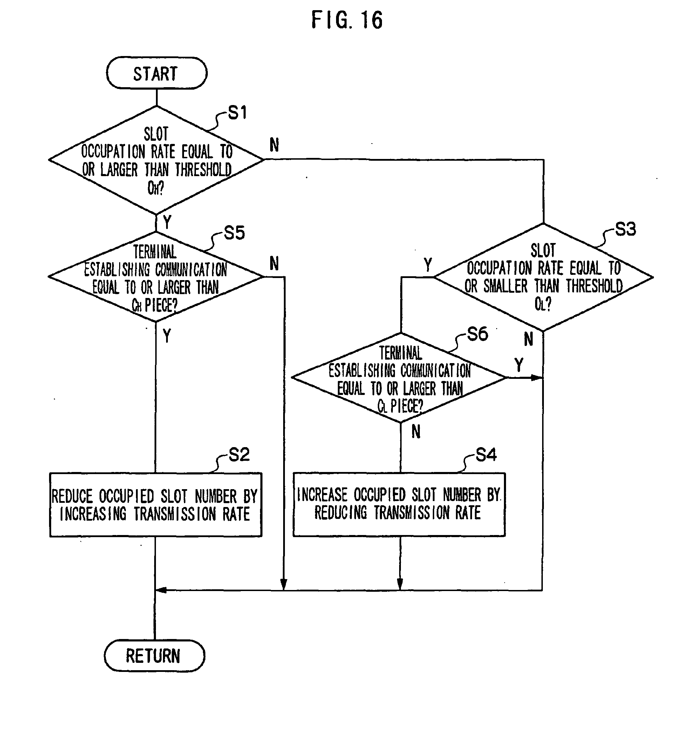

Fig. 16 is a flowchart showing other control routine of the transmission rate and the occupied slot number by the slot occupation rate and the communication establishing terminal number. The control routine 16 adds step S6 to the control routine of Fig. 15. That is, when the slot occupation rate is equal to or smaller than the threshold O_{L} at step S3, the slot/rate selecting portion 40 proceeds to a processing of step S6.

At step S6, the slot/rate selecting portion 40 determines whether the communication establishing terminal number is equal to or larger than C_{L} piece. C_{L} piece is an upper limit value of a number by which the communication establishing terminal number is conceived to be small. Further, the slot/rate selecting portion 40 finishes the routine to return in affirmative determination and proceeds to the processing of step S4 in negative determination.

Therefore, the slot/rate selecting portion 40 selects to increase the occupied slot number used for transmission of the wireless terminal apparatus itself and reduce the transmission rate when the slot occupation rate is low and the communication establishing number is small.

As described above, the wireless terminal apparatus according to the sixth embodiment reduces the occupied slot number used for transmission of the wireless terminal apparatus itself by increasing the transmission rate when the communication establishing terminal number is equal to or larger than C_{H} piece. Thereby, the wireless terminal apparatus vacates slots such that more surrounding-terminals can carry out communication by reducing the slot number of the wireless terminal apparatus itself so far as the wireless terminal apparatus can maintain a communication state with a number of surrounding-terminals. Further, when the communication establishing terminal number is equal to or smaller than C_{H} piece even when the slot occupation rate is equal to or larger than the threshold O_{H}, the wireless terminal apparatus does not control the occupied slot number but maintains a current state in order to maintain communication with surrounding-terminals.

Further, when the slot occupation rate is equal to or smaller than the threshold O_{L} and the communication establishing terminal number is less than C_{L}, the wireless terminal apparatus reduces the transmission rate by increasing the occupied slots used for transmission of the wireless terminal apparatus itself. As a result, by reducing the transmission rate, the wireless terminal apparatus can ensure necessary S/N and can communicate with more surrounding-terminals.

### [Seventh embodiment]

Next, a seventh embodiment of the invention will be explained. Further, portions or processings the same as those of the above-described embodiments are attached with the same notations and a detailed explanation thereof will be omitted.

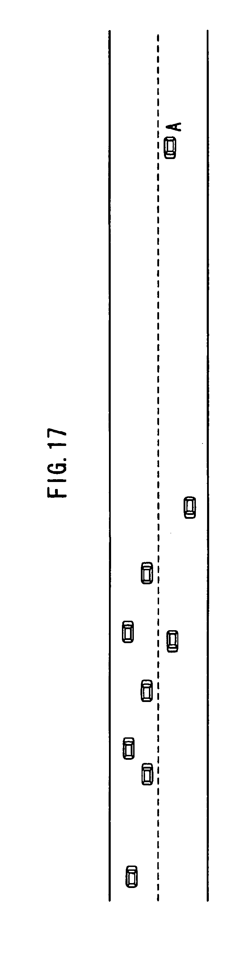

Fig. 17 is a view showing a second traffic situation of a moving member mounted with a wireless terminal apparatus. In Fig. 17, a moving member group (surrounding-terminal group) is present and the moving member A communicates with a predetermined moving member in the moving member group in a state of being isolated from the moving member group. When the moving member A increases the transmission rate by reducing the occupied slot number of the wireless terminal apparatus itself in such a case, there is a possibility that communication is not established by reducing S/N.

Hence, the wireless terminal apparatus according to the seventh embodiment controls the transmission rate and the occupied slot number of the wireless terminal apparatus itself based not only on the slot occupation rate but also on a receiving power of a packet detected by the wireless terminal apparatus itself.

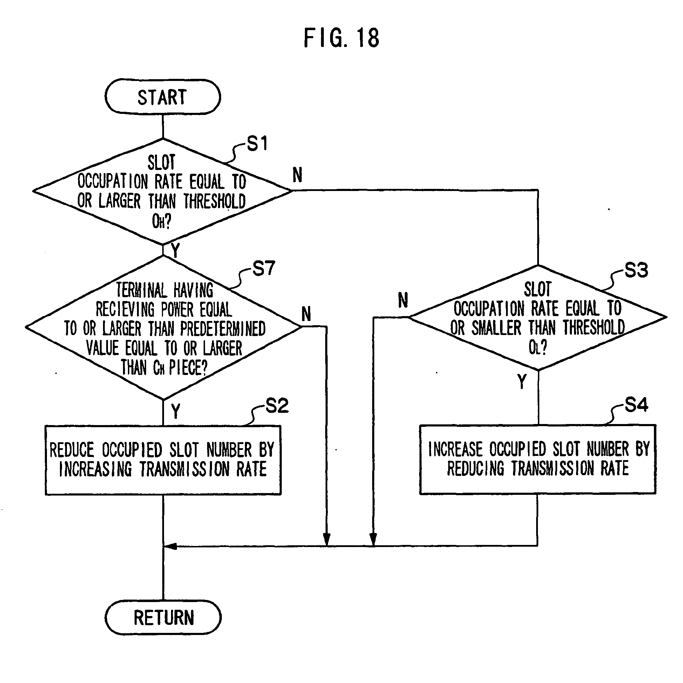

Fig. 18 is a flowchart showing a control routine of the transmission rate and the occupied slot number by the slot occupation rate and the receiving power. The control routine of Fig. 18 adds step S7 to the control routine of Fig. 12. That is, when the slot occupation rate is equal to or larger than the threshold O_{H} at step S1, the slot/rate selecting portion 40 proceeds to a processing of step S7.

At step S7, the slot/rate selecting portion 40 determines whether there are C_{H} piece or more of surrounding-terminals constituting transmission sources of packets having receiving powers equal to or larger than a predetermined value. Here, the predetermined value is a lower limit of the receiving power by which the receiving power is conceived to be sufficiently large. For example, when a packet is transmitted by current modulation system of QPSK (receiving sensitivity -79 dBm), the predetermined value may be set -82 dBm 1 stage higher than the QPSK modulation system. Further, the slot/rate selecting portion 40 proceeds to the processing of step S2 in a case of affirmative determination and finishes the routine to return in a case of negative determination.

In this way, by controlling the transmission rate and the occupied slot number of the wireless terminal apparatus itself based not only on the slot occupation rate but on the receiving power, network which can be used by surrounding-terminals can be increased while maintaining a communicatable state further firmly.

As described above, the wireless terminal apparatus according to the seventh embodiment can reduce unnecessary control since an effect of the processing of step S2 can be anticipated by utilizing the receiving power of a packet.

### [Eighth embodiment]

Next, an eighth embodiment of the invention will be explained. Further, portions or processing the same as those of the above-described embodiments are attached with the same notations and a detailed explanation thereof will be omitted. According to the fifth through the seventh embodiments, a premise is made by an example in which all of terminals transmit packets having an equal data amount once per 1 frame. In contrast thereto, according to the eighth embodiment, an explanation will be given of a wireless terminal apparatus for transmitting a packet having a data size which differs by a terminal.

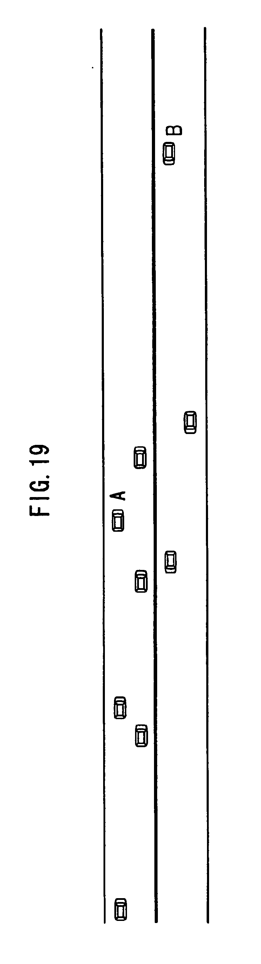

Fig. 19 is a view showing a third traffic situation of a moving member mounted with a wireless terminal apparatus. In Fig. 19, moving members A and B transmit data of a size twice as much as that of other moving member. In such a case, according to terminals of respective moving members, even numbers of slots used are the same, modulation systems (receiving sensitivities) of data may differ from each other.

For example, when wireless terminal apparatus of a number of moving members occupy 4 slots in the modulation system of QPSK, the wireless terminal apparatus of the moving members A and B occupy 8 slots in the modulation system of QPSK, or occupy 4 slots in the modulation system of 16QAM. Therefore, even when the occupied slot number or the receiving power stays the same in the respective terminals, the communication establishing terminal number may differ by a difference in the modulation system (receiving sensitivity).

Hence, the wireless terminal apparatus according to the eighth embodiment controls the transmission rate and the occupied slot number of the wireless terminal apparatus itself in consideration of how the communication state becomes when not only the slot occupation rate but also the transmission rate are controlled.

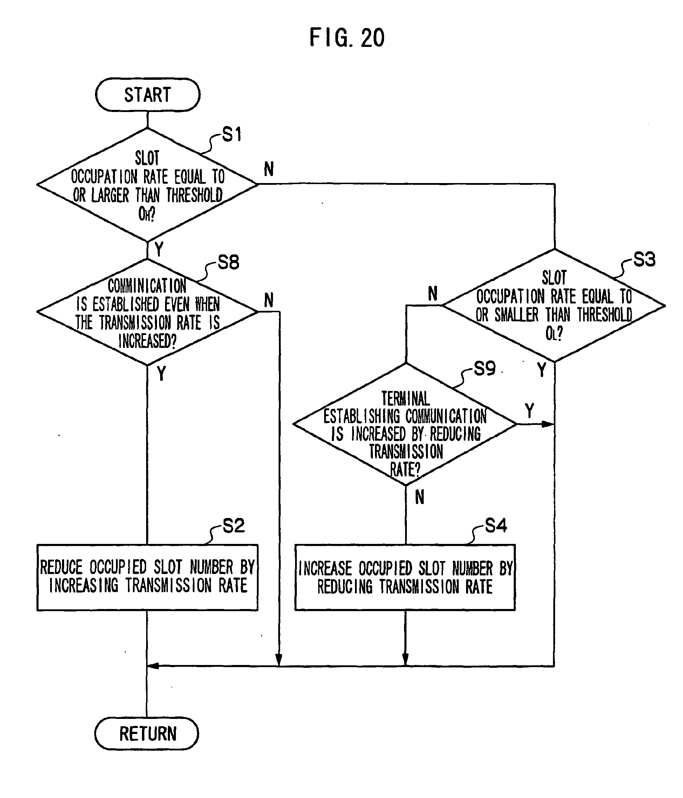

Fig. 20 is a flowchart showing a control routine of the transmission rate and the occupied slot number in consideration of the slot occupation rate and the communication state. A control routine of Fig. 20 adds step S8 and step S9 to the control routine of Fig. 12. That is, when the slot occupation rate is equal to or larger than the threshold O_{H} at step S1, the slot/rate selecting portion 40 proceeds to a processing of step S8.

At step S8, the slot/rate selecting portion 40 determines whether communication is established (whether current communication state can be maintained) even when the transmission rate is increased, proceeds to the processing of step S2 in a case of affirmative determination and finishes the routine to return in a case of negative determination. Specifically, the slot/rate selecting portion 40 executes the following determination rules.

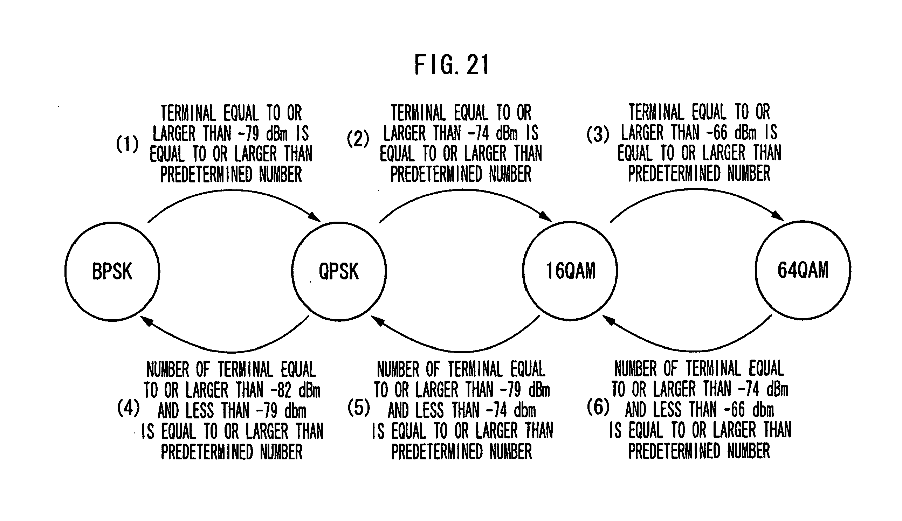

Fig. 21 is a view showing determination rules of step S8 and step S9 mentioned later. Specific determination rules differ by the current transmission rate.

At step S8, the slot/rate selecting portion 40 determines whether communication is established in a case in which, for example, the current modulation system of the wireless terminal apparatus itself is BPSK (6 Mbps), even when the transmission rate is increased by one stage to 12 Mbps (QPSK, receiving sensitivity -79 dBm), further specifically, (1) whether there are a predetermined number or more of surrounding-terminals constituting transmission sources of packets having receiving powers equal to or larger than -79 dBm.

Further, for example, in a case in which the current modulation system is QPSK (12 bps), the slot/rate selecting portion 40 determines whether communication is established even when the transmission rate is increased by 1 stage to 24 Mbps (16QAM, receiving sensitivity -74 dBm), further specifically, (2) whether there are a predetermined number or more of surrounding-terminals constituting transmission sources of packets having receiving powers equal to or larger than -74 dBm.

Further, for example, in a case in which the current modulation system is 16QAM (24 Mbps), the slot/rate selecting portion 40 determines whether communication is established even when the transmission rate is increased by 1 stage to 48 Mbps (64QAM, receiving sensitivity -66 dBm), further specifically, (3) whether there are a predetermined number or more of surrounding-terminals constituting transmission sources of packets having receiving powers equal to or larger than -66 dBm.

The determination rules show to determine whether there are a predetermined number or more of packets of transmission rates faster than the transmission rate of the wireless terminal apparatus itself in packets detected in 1 frame time period. In any of the determination rules, the slot/rate selecting portion 40 proceeds to the processing of step S2 in the case of affirmative determination and finishes the routine to return in the case of negative determination.

Thereby, the wireless terminal apparatus according to the eighth embodiment increases the transmission rate and reduces the occupied slot number of the wireless terminal apparatus itself when there are present a predetermined number or more of packets of transmission rates higher than the transmission rate of the wireless terminal apparatus itself, and therefore, network can be opened to surrounding-terminals while firmly maintaining the communicatable state.

On the other hand, when at step S3, the slot occupation rate is equal to or smaller than the threshold O_{L}, there is an allowance in slots, and therefore, the slot/rate selecting portion 40 aims to establish communication with remoter terminals by increasing the slot number and reducing the transmission rate. When the slot occupation rate exceeds the threshold O_{L} at step S3, the slot/rate selecting portion 40 proceeds to a processing of step S9.

At step S9, the slot/rate selecting portion 40 determines whether the communication establishing terminal number is increased by reducing the transmission rate, proceeds to step S4 in a case of affirmative determination and finishes the routine to return in a case of negative determination. Specifically, the slot/rate selecting portion 40 executes the following determination rule.

As shown by Fig. 21, at step S9, the slot/rate selecting portion 40 determines whether the communication establishing terminal number is increased by reducing the transmission rate to 24 Mbps (16QAM, receiving sensitivity -74 dBm) when the current modulation system is 64QAM (48 Mbps), further specifically, (4) whether there are a predetermined number (current communication establishing terminal number) or more of the number of surrounding-terminals constituting transmission sources of packets having receiving powers equal to or larger than -74 dBm and less than -66 dBm (communication establishing terminal number).

For example, in a case in which the current modulation system is 16QAM (24 Mbps), the slot/rate selecting portion 40 determines whether the communication establishing terminal number is increased by reducing the transmission rate to 12 Mbps (QPSK, receiving sensitivity -79 dBm), further specifically, (5) whether there are a predetermined number (current communication establishing terminal number) or more of the number of surrounding-terminals constituting transmission sources of packets having receiving powers equal to or larger than -79 dBm and less than -74 dBm (communication establishing terminal number).

Further, for example, in a case in which the current modulation system is QPSK (12 Mbps), the slot/rate selecting portion 40 determines whether the communication establishing terminal number is increased by reducing the transmission rate to 6 Mbps (BPSK, receiving sensitivity -82 Bm), further specifically, (6) whether there are a predetermined number (current communication establishing terminal number) or more of the number of surrounding-terminals constituting transmission sources of packets having receiving powers equal to or larger than -82 dBm and less than -79 dBm (communication establishing terminal number).

The determination rules show to determine whether there are a predetermined number or more of packets having transmission rate lower than the transmission rate of the wireless terminal apparatus itself in packets detected in 1 frame time period. In any of determination rules, the slot/rate selecting portion 40 proceeds to the processing of step S4 in a case of affirmative determination and finishes the routine to return in a case of negative determination.

Thereby, the wireless terminal apparatus according to the eighth embodiment reduces the transmission rate and increases the occupied slot number of the wireless terminal apparatus itself when there are present a predetermined number or more of packets having transmission rates lower than the transmission rate of the wireless terminal apparatus itself. Therefore, the transmission rate and the occupied slot number are controlled only when an effect of increasing the communication establishing terminal number can be confirmed.

As described above, the wireless terminal apparatus according to the eighth embodiment determines whether communication is established or the communication establishing terminal number is increased before controlling the transmission rate and the number of slots occupied by the wireless terminal apparatus itself. Thereby, firmly, the communication state can be maintained or the communication state can be prmoted.

### [Ninth embodiment]

Next, a ninth embodiment of the invention will be explained. Further, portions or processings the same as those of the above-described embodiments are attached with the same notations and a detailed explanation thereof will be omitted.

A wireless terminal apparatus according to the ninth embodiment is combined with the fifth through the eighth embodiments. Specifically, the wireless terminal apparatus carries out the following processing.

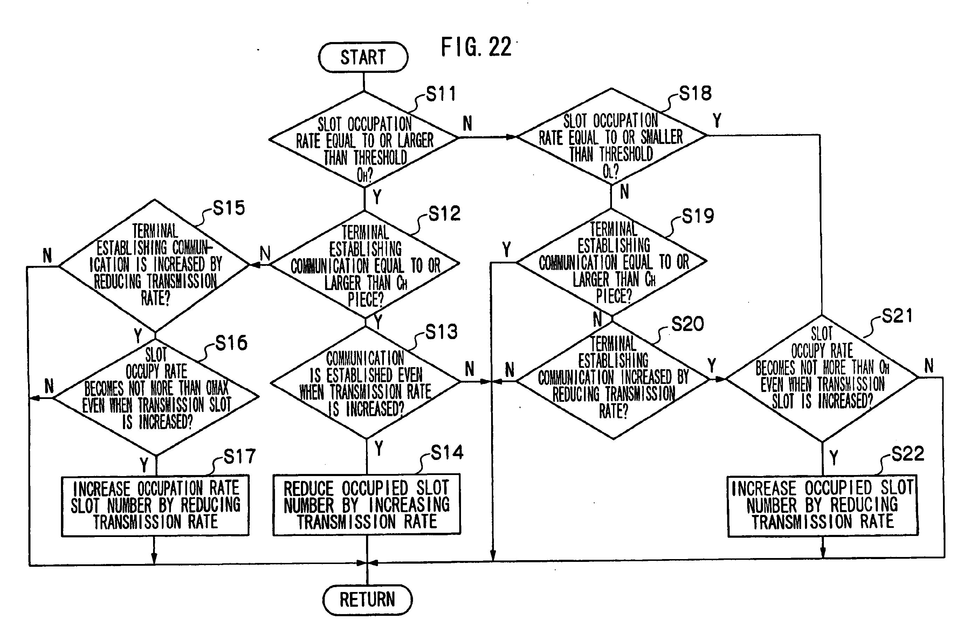

Fig. 22 is a flowchart showing a control routine of the transmission rate and the occupied slot number.

At step S11, the slot/rate selecting portion 40 determines whether the slot occupation rate detected by the packet detecting portion 13 is equal to or larger than the threshold O_{H} similar to step S1, proceeds to the processing of step S12 in a case of affirmative determination and proceeds to the processing of step S18 in a case of negative determination.

At step S12, the slot/rate selecting portion 40 determines whether the communication establishing terminal number is equal to or larger than C_{H} piece similar to step S5, proceeds to the processing of step S13 in a case of affirmative determination and proceeds to the processing of step S15 in a case of negative determination.

At step S13, the slot/rate selecting portion 40 determines whether communication is established (current communication state can be maintained) even when the transmission rate is increased similar to step S8, proceeds to the processing of step S14 in a case of affirmative determination and finishes the routine to return in a case of negative determination.

At step S14, the slot/rate selecting portion 40 selects to reduce the occupied slot number of the wireless terminal apparatus itself by increasing the transmission rate of packet similar to step S2 to finish the routine to return. Further, the transmission rate control portion 51 controls the transmitting circuit 20 to constitute the selected modulation system, and the transmission timing control portion 19 controls the transmission timing of the transmitting circuit 20.

Further, at step S15, the slot/rate selecting portion 40 determines whether the communication establishing terminal number is increased by reducing the transmission rate similar to step S9, proceeds to the processing of step S16 in a case of affirmative determination and finishes the routine to return in a case of negative determination.

At step S16, the slot/rate selecting portion 40 determines whether the slot occupation rate becomes not more than a threshold Omax even when the occupied slot of the wireless terminal apparatus itself is increased. Here, the threshold Omax indicates a maximum communicatable slot occupation rate. Further, the slot/rate selecting portion 40 proceeds to a processing of step S17 in a case of affirmative determination and finishes the routine to return in a case of negative determination.

At step S17, the slot/rate selecting portion 40 selects to increase slots by reducing the transmission rate similar to step S4 to finish the routine to return. Further, the transmission rate control portion 51 controls the transmitting circuit 20 to constitute the selected modulation system, and the transmission timing control portion 19 controls the transmission timing of the transmitting circuit 20.

On the other hand, at step S18, the slot/rate selecting portion 40 determines whether the slot occupation rate is less than the threshold O_{L} similar to step S3 and proceeds to the processing of step S21 in a case of affirmative determination and proceeds to step S19 in a case of negative determination.

At step S19, the slot/rate selecting portion 40 determines whether the communication establishing terminal number is equal to or larger than C_{H} piece similar to step S12, finishes the routine to return in a case of affirmative determination and proceeds to step S20 in a case of negative determination.

At step S20, the slot/rate selecting portion 40 determines whether the communication establishing terminal number is increased by reducing the transmission rate similar to step S15, proceeds to the processing of step S21 in a case of affirmative determination and finishes the routine to return in a case of negative determination.

At step S21, the slot/rate selecting portion 40 determines whether the slot occupation rate becomes not more than the threshold O_{H} even when the transmission slot of the wireless terminal apparatus itself is increased, proceeds to step S22 in a case of affirmative determination and finishes the routine to return in a case of negative determination.

At step S22, the slot/rate selecting portion 40 selects to increase slots by reducing the transmission rate similar to step S17 and finishes the routine to return. Further, the transmission rate control portion 51 controls the transmitting circuit 20 to constitute the selected modulation system and the transmission timing control portion 19 controls the transmission timing of the transmitting circuit 20.

As described above, in a case in which the slot occupation rate is equal to or larger than the threshold O_{H} (affirmative determination of step s11), and the communication establishing terminal number is equal to or lager than C_{H} piece (affirmative determination of step S12), the wireless terminal apparatus according to the ninth embodiment limits the case to the case of establishing communication even when the transmission rate is increased to thereby reduce the occupied slot number of the wireless terminal apparatus itself by increasing the transmission rate. Thereby, chances of transmitting packets equal to surrounding-terminals can be given while firmly maintaining the current communicatable state.

In a case in which although the slot occupation rate is equal to or lager than the threshold O_{H} (affirmative determination of step S11), the communication establishing terminal number is less than C_{H} (negative determination of step S12), the wireless terminal apparatus limits the case to the case in which the communication establishing terminal number is increased by reducing the transmission rate and the slot occupation rate does not exceed the threshold Omax even when the occupied slot number of the wireless terminal apparatus itself is increased to increase the occupied slot number of the wireless terminal apparatus itself by reducing the transmission rate. Thereby, a condition necessary for receiving data is alleviated, and therefore, the communicable terminal number can be increased.

In a case in which the slot occupation rate is less than the threshold O_{H} (negative determination of step S11) and the slot occupation rate is less than the threshold O_{L} (affirmative determination of step S18), when the slot occupation rate does not exceed the threshold O_{H} even when the occupied slot number of the wireless terminal apparatus itself is increased, the wireless terminal apparatus reduces the transmission rate by increasing the occupied slot number of data. Thereby, the condition necessary for receiving data is alleviated, and therefore, communication can be established with more terminals.

In a case in which the slot occupation rate is less than the threshold O_{H} (negative determination of step S11) and the slot occupation rate is equal to or larger than the threshold O_{L} (negative determination of step S18), when the communication establishing terminal number does not exceed C_{H} piece and the communication establishing terminal number is increased by reducing the transmission rate and the slot occupation rate does not exceed the threshold O_{H} even when the occupied slot of the wireless terminal apparatus itself is increased, the wireless terminal apparatus reduces the transmission rate by increasing the occupied slot number of the wireless terminal apparatus itself. Thereby, the condition necessary for receiving the data is alleviated, and therefore, communication with more terminals can be established.

### [Tenth embodiment]

Next, a tenth embodiment of the invention will be explained. Further, portions or processings the same as those of the above-described embodiments are attached with the same notations and a detailed explanation thereof will be omitted.

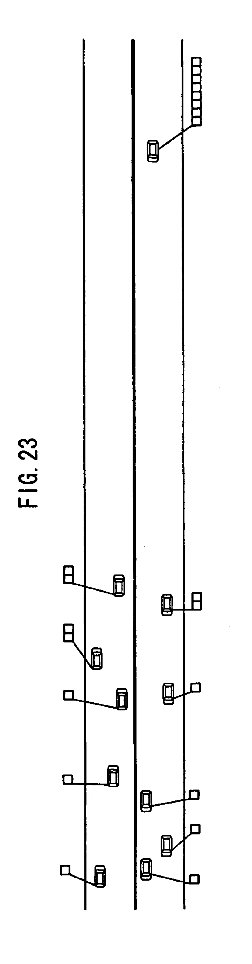

Fig. 23 is a view showing a state in which one piece of a moving member mounted with a wireless terminal apparatus excessively occupies slots. In order that respective wireless terminal apparatus intercommunicate with each other under the same condition, it is preferable that occupied slot numbers of respective terminals of 1 frame time period are as uniform as possible. Hence, in the case of Fig. 23, there is a possibility that communication with surrounding-terminals is not established other than information having a high priority and it is preferable to reduce an occupied slot number.

Hence, the wireless terminal apparatus according to the tenth embodiment controls an occupied slot number of the wireless terminal apparatus itself as follows in order to make occupied slot numbers of respective terminals uniform.

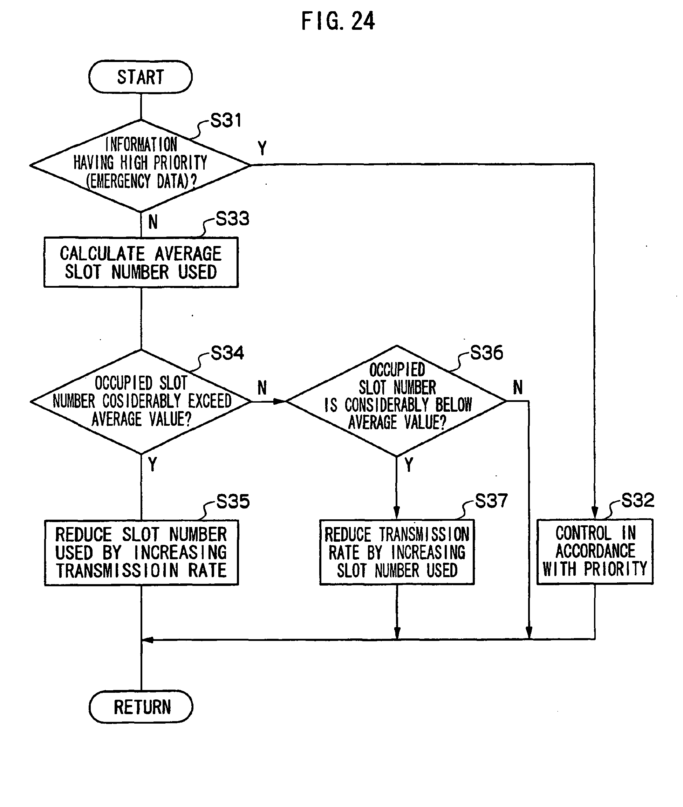

Fig. 24 is a flowchart showing a routine of a processing of making occupied slot numbers uniform.

At step S31, the slot/rate selecting portion 40 determines whether a detected packet is information having a high priority (emergency data) based on priority information extracted from the packet by the packet demodulating portion 14, proceeds to S32 in a case of affirmative determination, and proceeds to step S33 in a case of negative determination.

At step S32, the slot/rate selecting portion 40 carries out a predetermined control for the detected packet in accordance with priority information, thereafter, passes through the routine to return. On the other hand, at step S33, the slot/rate selecting portion 40 calculates an average slot number used for surrounding-terminals and proceeds to step S34. An average slot number used is calculated by dividing, for example, an occupied slot number of 1 frame time period by a communication establishing terminal number.

At step S34, the slot/rate selecting portion 40 determines whether the occupied slot number of the wireless terminal apparatus itself is larger than the average slot number used calculated at step S33 by a predetermined value or more, that is, whether the occupied slot number of the wireless terminal apparatus itself is considerably larger than the average slot number used, proceeds to step S35 in a case of affirmative determination and proceeds to step S36 in a case of negative determination.

At step S35, the slot/rate selecting portion 40 reduces the occupied slot number by increasing the transmission rate.

On the other hand, at step S36, the slot/rate selecting portion 40 determines whether the occupied slot number of the wireless terminal apparatus itself is smaller than the average slot number used calculated at step S33 by a predetermined value or more, that is, whether the occupied slot number of the wireless terminal apparatus itself is considerably smaller than the average slot number used, proceeds to step S37 in a case of affirmative determination and passes through the routine to return in a case of negative determination. At step S37, the slot/rate selecting portion 40 reduces the transmission rate by increasing the occupied slot number.

As described above, the wireless terminal apparatus according to the tenth embodiment compares the occupied slot number of the wireless terminal apparatus itself and the occupied slot number of the average value and controls to increase or reduce the occupied slot number in accordance with large or small thereof, and therefore, the occupied slot numbers of the respective terminals in 1 frame time period can be made to be uniform.

Further, according to the embodiment, the slot/rate selecting portion 40 of the wireless terminal apparatus may carry out the following processing. For example, when the slot occupation rate is equal to or larger than the threshold O_{H} and the occupied slot number of the wireless terminal apparatus itself is equal to or larger than the average slot number used, the slot/rate selecting portion 40 may increase the transmission speed by reducing the slot number. Thereby, when the slot occupation rate is low, the occupied slot number can be prevented from being reduced further.

Further, when the slot occupation rate is less than the threshold O_{L} and the occupied slot number of the wireless terminal apparatus itself is less than the average slot number used, the slot/rate selecting portion 40 may increased the slot number and reduce the transmission speed. Thereby, when the slot occupation rate is high, the occupied slot number can be prevented from being increased further.

Further, the slot/rate selecting portion 40 may control the transmission rate and the occupied slot number along with the receiving power and information of the modulation system as in the above-described embodiments.

For example, in a case in which the occupied slot number of the wireless terminal apparatus itself is larger than the average slot number used, when a number of surrounding-terminals of transmission sources of packets having receiving powers exceeding a predetermined value is equal to or larger than C_{H} piece, the slot/rate selecting portion 40 may increase the transmission rate and reduce the occupied slot number of the wireless terminal apparatus itself and may not carry out the control when the number of the surrounding-terminals of the transmission sources is less than C_{H} piece. Thereby, the transmission rate and the occupied slot number of the wireless terminal apparatus itself can be controlled only when the communicatable state can be maintained.

Further, the invention is not limited to the above-described embodiments but is naturally applicable also to a constitution which is changed in view of design thereof within the range described in the scope of claims. For example, the wireless terminal apparatus having the constitution shown in Fig. 1 may further include the slot/rate selecting portion 40, the transmission rate control portion 51 shown in Fig. 8. Thereby, the wireless terminal apparatus arbitrarily combined with the first through the tenth embodiments mentioned above can be realized. Further, the transmission slot selecting portion 17 and the slot/rate selecting portion 40 may be constituted by the same circuit. Further, the wireless terminal apparatus constituted in this way can execute an arbitrary operation of the first through the tenth embodiments in accordance with a situation. That is, the wireless terminal apparatus can control the timing of transmitting the packet as explained in any of the first through the fourth embodiments and can control the occupied slot number and the transmission rate as explained in any one of the fifth through the tenth embodiments.

### Industrial Applicability

The invention is applicable also to a communication terminal apparatus mounted on a vehicle and preferable by being used for periodically exchanging information among vehicles.

### Description of Reference Numerals and Signs

- 11: receiving antenna
- 12: receiving circuit
- 13: packet detecting portion
- 14: packet demodulating portion
- 15: frame information storing portion
- 16: frame information generating portion
- 17: transmission slot selecting portion
- 18: packet generating portion
- 19: transmission timing control portion
- 20: transmitting circuit
- 21: transmitting antenna
- 30: slot information detecting portion
- 40: slot/rate selecting portion
- 50: access control portion
- 51: transmission rate control portion

## Claims

1. A communication terminal apparatus for subjecting a frame repeated at a predetermined period with one or more of surrounding-terminals to time division by a plurality of slots and broadcasting data per slot units, the communication terminal apparatus comprising:
receiving means (11, 12) or receiving a packet transmitted from a surrounding-terminal;
packet detecting means (13) for detecting by which slot the packet received by the receiving means (11, 12) is received;
demodulating means (14) for demodulating data from the received packet;
frame information storing means (15) for storing a plurality of pieces of frame information obtained by demodulating the received packet;
frame information generating means (16) for generating the frame information indicating "busy" when reception of the packet has succeeded and indicating "free" when the reception of the packet has failed for the respective slots based on a result detected by the packet detecting means (13);
transmission slot selecting means (17) for selecting the slot for transmitting the packet including the data to be transmitted based on the frame information from the surrounding-terminal stored by the frame information storing means (15) and the frame information generated by the frame information generating means (16); and
transmitting means (20, 21) for transmitting the packet at a timing of the transmission slot selected by the transmission slot selecting means (17),
wherein, with respect to the communication terminal apparatus' own transmission slot, the transmission slot selecting means (17) is adapted to change the transmission slot when "free" is received from the same surrounding-terminal continuously over a plurality of the frames.

2. A communication terminal apparatus for subjecting a frame repeated by a predetermined time period with one or more of surrounding-terminals to time division by a plurality of slots and broadcasting data per slot units, the communication terminal apparatus comprising:
receiving means for receiving a packet transmitted from a surrounding-terminal;
packet detecting means (13) for detecting by which slot the packet received by the receiving means (11, 12) is received;
demodulating means (14) for demodulating data from the received packet;
frame information storing means (15) for storing a plurality of pieces of frame information obtained by demodulating the received packet;
frame information generating means (16) for generating the frame information indicating "detection" when the packet is detected and indicating "nondetection" when the packet is not detected for the respective slots based on a result detected by the packet detecting means (13);
transmission slot selecting means (17) for selecting the slot for transmitting the packet including the data to be transmitted based on the frame information from the surrounding-terminal stored at the frame information storing means (15) and the frame information generated by the frame information generating means (16); and
transmitting means (20, 21) for transmitting the packet at a timing of the transmission slot selected by the transmission slot selecting means (17),
wherein, with respect to the communication terminal apparatus' own transmission slot, the transmission slot selecting means (17) is adapted to use the same slot in a next time when "detection" is detected, and with respect to a slot other than its own transmission slot, the transmission slot selecting means (17) is adapted to prohibit selecting the slot as its own transmission slot when "detection" is detected.

3. The communication terminal apparatus according to Claim 2, wherein, with respect to a slot other than a transmission slot in which a packet is transmitted, the transmission slot selecting means (17) is adapted to determine the slot other than the transmission slot to be a vacant slot when the "nondetection" information is detected from all of the packets.

4. A communication terminal apparatus for subjecting a frame repeated at a predetermined period with one or more surrounding-terminals to time division by a plurality of slots and broadcasting data per slot units, the communication terminal apparatus comprising:
receiving means (11, 12) for receiving a packet transmitted from a surrounding-terminal;
packet detecting means (13) for detecting by which slot the packet received by the receiving means (11, 12) is received;
demodulating means (14) for demodulating data from the received packet;
frame information storing means (15) for storing a plurality of pieces of frame information obtained by demodulating the received packet;
frame information generating means (16) for generating the frame information indicating "reserve" when the demodulation of the packet has succeeded, indicating "detection" when the packet has been detected but the demodulation has failed, and indicating "nondetection" when the packet itself is not detected, for the respective slots based on a result detected by the packet detecting means (13) ;
transmission slot selecting means (17) for selecting the slot for transmitting the packet including the data to be transmitted based on the frame information from the surrounding-terminal stored by the frame information storing means (15) and the frame information generated by the frame information generating means (16); and
transmitting means (20, 21) for transmitting the packet at a timing of the transmission slot selected by the transmission slot selecting means (17).

5. The communication terminal apparatus according to Claim 4, wherein, with respect to a transmission slot in which a packet is transmitted, the transmission slot selecting means (17) is adapted to change the transmission slot when only "detection" is detected from the respective packets.

6. The communication terminal apparatus according to Claim 4, wherein, with respect to the transmission slot in which a packet is transmitted, the transmission slot selecting means (17) is adapted to change the transmission slot when "detection" and "nondetection" are detected from the respective packets.

7. The communication terminal apparatus according to Claim 4, wherein, with respect to a slot other than a transmission slot in which a packet is transmitted, the transmission slot selecting means (17) is adapted to change or maintain the transmission slot in accordance with numbers of increase or decrease of the "reserve" and "detection" detected from any of the packets.

8. A communication terminal apparatus for subjecting a frame repeated at a predetermined period with one or more of surrounding-terminals to time division by a plurality of slots and broadcasting data per slot units, the communication terminal apparatus comprising:
receiving means (11, 12) or receiving a packet transmitted from a surrounding-terminal;
packet detecting means (13) for detecting by which slot the packet received by the receiving means (11, 12) is received;
demodulating means (14) for demodulating data from the received packet;
frame information storing means (15) for storing a plurality of pieces of frame information obtained by demodulating the received packet;
frame information generating means (16) for generating the frame information indicating "reserve" when the demodulation of the packet has succeeded, indicating "high detection" when the packet has been detected but the demodulation has failed and when a receiving power exceeds a predetermined value, indicating "low detection" when the packet has been detected but the demodulation has failed and when the receiving power is equal to or smaller than the predetermined value, and indicating "nondetection" when the packet itself is not detected, for the respective slots based on a result detected by the packet detecting means (13);
transmission slot selecting means (17) for selecting the slot for transmitting the packet including the data to be transmitted based on the frame information from the surrounding-terminal stored by the frame information storing means (15) and the frame information generated by the frame information generating means (16); and
transmitting means (20, 21) for transmitting the packet at a timing of the transmission slot selected by the transmission slot selecting means (17).

9. The communication terminal apparatus according to Claim 8, wherein, with respect to a transmission slot in which a packet is transmitted, the transmission slot selecting means (17) is adapted to change the transmission slot in accordance with numbers of detecting "high detection" and "low detection" when the "high detection" or "low detection" are detected from the respective packets.

10. The communication terminal apparatus according to Claim 8, wherein, with respect to a transmission slot in which a packet is transmitted, the transmission slot selecting means (17) is adapted to change the transmission slot when "high detection" is detected from the respective packets continuously for predetermined number of times.

11. The communication terminal apparatus according to any one of Claim 1 through Claim 10, further comprising:
slot occupation rate detecting means for detecting a slot occupation rate indicating a rate of the slots occupied within the frame based on the packet received by the receiving means (11, 12), and
controlling means for controlling the occupied slot number per a frame time period of transmitting by the communication terminal apparatus itself based on the slot occupation rate detected by the slot occupation rate detecting means, and the transmission rate of the data in accordance with the occupied slot number,
wherein the transmitting means, (20, 21) is adapted to, transmit the packet in accordance with the occupied slot number and the transmission rate controlled by the controlling means.

## Patentansprüche

1. Kommunikationsendgerät zum Zeitmultiplexen eines Rahmens, der mit einem oder mehreren von Umgebungsendgeräten mit einer vorbestimmten Periode wiederholt wird, durch eine Mehrzahl von Schlitzen und Übertragen von Daten in Einheiten von Schlitzen, mit:
einem Empfangsmittel (11, 12) zum Empfangen eines Pakets, das von einem Umgebungsendgerät gesendet wird;
einem Paketdetektionsmittel (13) zum Detektieren, von welchem Schlitz das von dem Empfangsmittel (11, 12) empfangene Paket empfangen worden ist;
einem Demodulationsmittel (14) zum Demodulieren von Daten aus dem empfangenen Paket;
einem Rahmeninformationsspeichermittel (15) zum Speichern einer Mehrzahl von Stücken von Rahmeninformation, die durch Demodulieren des empfangenen Pakets erhalten wird;
einem Rahmeninformationserzeugungsmittel (16) zum Erzeugen der Rahmeninformation, die "belegt" anzeigt, wenn ein Empfang des Pakets erfolgreich war, und "frei" anzeigt, wenn der Empfang des Pakets fehlgeschlagen ist, für die jeweiligen Schlitze basierend auf einem von dem Paketdetektionsmittel (13) detektierten Resultat;
einem Sendeschlitzauswahlmittel (17) zum Auswählen des Schlitzes zum Senden des Pakets mit den zu sendenden Daten basierend auf der Rahmeninformation von dem Umgebungsendgerät, die von dem Rahmeninformationsspeichermittel (15) gespeichert wird, und der Rahmeninformation, die von dem Rahmeninformationserzeugungsmittel (16) erzeugt wird; und
einem Sendemittel (20, 21) zum Senden des Pakets zu einer Zeit des Sendeschlitzes, der durch das Sendeschlitzauswahlmittel (17) ausgewählt wird,
wobei bezüglich des eigenen Sendeschlitzes des Kommunikationsendgeräts das Sendeschlitzauswahlmittel (17) zum Ändern des Sendeschlitzes, wenn über mehrere Rahmen von demselben Umgebungsendgerät kontinuierlich "frei" empfangen wird, angepasst ist.

2. Kommunikationsendgerät zum Zeitmultiplexen eines Rahmens, der mit einem oder mehreren von Umgebungsendgeräten mit einer vorbestimmten Periode wiederholt wird, durch eine Mehrzahl von Schlitzen und Übertragen von Daten in Einheiten von Schlitzen, mit:
einem Empfangsmittel (11, 12) zum Empfangen eines Pakets, das von einem Umgebungsendgerät gesendet wird;
einem Paketdetektionsmittel (13) zum Detektieren, von welchem Schlitz das von dem Empfangsmittel (11, 12) empfangene Paket empfangen worden ist;
einem Demodulationsmittel (14) zum Demodulieren von Daten aus dem empfangenen Paket;
einem Rahmeninformationsspeichermittel (15) zum Speichern einer Mehrzahl von Stücken von Rahmeninformation, die durch Demodulieren des empfangenen Pakets erhalten wird;
einem Rahmeninformationserzeugungsmittel (16) zum Erzeugen der Rahmeninformation, die eine "Detektion" anzeigt, wenn das Pakets detektiert wird, und "keine Detektion" anzeigt,
wenn das Pakets nicht detektiert wird, für die jeweiligen Schlitze basierend auf einem von dem Paketdetektionsmittel (13) detektierten Resultat;
einem Sendeschlitzauswahlmittel (17) zum Auswählen des Schlitzes zum Senden des Pakets mit den zu sendenden Daten basierend auf der Rahmeninformation von dem Umgebungsendgerät, die von dem Rahmeninformationsspeichermittel (15) gespeichert wird, und der Rahmeninformation, die von dem Rahmeninformationserzeugungsmittel (16) erzeugt wird; und
einem Sendemittel (20, 21) zum Senden des Pakets zu einer Zeit des Sendeschlitzes, der durch das Sendeschlitzauswahlmittel (17) ausgewählt wird,
wobei bezüglich des eigenen Sendeschlitzes des Kommunikationsendgeräts das Sendeschlitzauswahlmittel (17) zum Verwenden desselben Sendeschlitzes bei einem nächsten Mal, wenn eine "Detektion" detektiert wird, angepasst ist und bezüglich eines anderen als dem eigenen Sendeschlitz das Sendeschlitzauswahlmittel (17) zum Verhindern einer Auswahl des Schlitzes als den eigenen Sendeschlitz, wenn eine "Detektion" detektiert wird, angepasst ist.

3. Kommunikationsendgerät nach Anspruch 2, bei dem bezüglich eines anderen als einem Sendeschlitz, in dem ein Paket gesendet wird, das Sendeschlitzauswahlmittel (17) zum Bestimmen, dass der andere als der Sendeschlitz ein vakanter Schlitz ist, wenn für alle Pakete die Information "keine Detektion" detektiert wird, angepasst ist.

4. Kommunikationsendgerät zum Zeitmultiplexen eines Rahmens, der mit einem oder mehreren von Umgebungsendgeräten mit einer vorbestimmten Periode wiederholt wird, durch eine Mehrzahl von Schlitzen und Übertragen von Daten in Einheiten von Schlitzen, mit:
einem Empfangsmittel (11, 12) zum Empfangen eines Pakets, das von einem Umgebungsendgerät gesendet wird;
einem Paketdetektionsmittel (13) zum Detektieren, von welchem Schlitz das von dem Empfangsmittel (11, 12) empfangene Paket empfangen worden ist;
einem Demodulationsmittel (14) zum Demodulieren von Daten aus dem empfangenen Paket;
einem Rahmeninformationsspeichermittel (15) zum Speichern einer Mehrzahl von Stücken von Rahmeninformation, die durch Demodulieren des empfangenen Pakets erhalten wird;
einem Rahmeninformationserzeugungsmittel (16) zum Erzeugen der Rahmeninformation, die "reserviert" anzeigt, wenn die Demodulation des Pakets erfolgreich war, eine "Detektion" anzeigt, wenn das Paket detektiert wurde und die Demodulation fehlgeschlagen ist, und "keine Detektion" anzeigt, wenn das Paket selbst nicht detektiert wird, für die jeweiligen Schlitze basierend auf einem von dem Paketdetektionsmittel (13) detektierten Resultat;
einem Sendeschlitzauswahlmittel (17) zum Auswählen des Schlitzes zum Senden des Pakets mit den zu sendenden Daten basierend auf der Rahmeninformation von dem Umgebungsendgerät, die von dem Rahmeninformationsspeichermittel (15) gespeichert wird, und der Rahmeninformation, die von dem Rahmeninformationserzeugungsmittel (16) erzeugt wird; und
einem Sendemittel (20, 21) zum Senden des Pakets zu einer Zeit des Sendeschlitzes, der durch das Sendeschlitzauswahlmittel (17) ausgewählt wird.

5. Kommunikationsendgerät nach Anspruch 4, bei dem bezüglich des Sendeschlitzes, in dem ein Paket gesendet wird, das Sendeschlitzauswahlmittel (17) dazu angepasst ist, den Sendeschlitz zu ändern, wenn lediglich eine "Detektion" für die jeweiligen Pakete detektiert wird.

6. Kommunikationsendgerät nach Anspruch 4, bei dem bezüglich eines Sendeschlitzes, in dem ein Paket gesendet wird, das Sendeschlitzauswahlmittel (17) dazu angepasst ist, den Sendeschlitz zu ändern, wenn für die jeweiligen Pakete eine "Detektion" und "keine Detektion" detektiert werden.

7. Kommunikationsendgerät nach Anspruch 4, bei dem bezüglich eines anderen als einem Sendeschlitz, in dem ein Paket gesendet wird, das Sendeschlitzauswahlmittel (17) dazu angepasst ist, den Sendeschlitz gemäß Anzahlen einer Zunahme oder Verringerung von "reserviert" und "Detektion", die für die Pakete detektiert werden, zu ändern oder beizubehalten.

8. Kommunikationsendgerät zum Zeitmultiplexen eines Rahmens, der mit einem oder mehreren von Umgebungsendgeräten mit einer vorbestimmten Periode wiederholt wird, durch eine Mehrzahl von Schlitzen und Übertragen von Daten in Einheiten von Schlitzen, mit:
einem Empfangsmittel (11, 12) zum Empfangen eines Pakets, das von einem Umgebungsendgerät gesendet wird;
einem Paketdetektionsmittel (13) zum Detektieren, von welchem Schlitz das von dem Empfangsmittel (11, 12) empfangene Paket empfangen worden ist;
einem Demodulationsmittel (14) zum Demodulieren von Daten aus dem empfangenen Paket;
einem Rahmeninformationsspeichermittel (15) zum Speichern einer Mehrzahl von Stücken von Rahmeninformation, die durch Demodulieren des empfangenen Pakets erhalten wird;
einem Rahmeninformationserzeugungsmittel (16) zum Erzeugen der Rahmeninformation, die "reserviert" anzeigt, wenn die Demodulation des Pakets erfolgreich war, eine "hohe Detektion" anzeigt, wenn das Paket detektiert wurde und die Demodulation fehlgeschlagen ist und eine Empfangsleistung einen vorbestimmten Wert überschreitet, eine "niedrige Detektion"
anzeigt, wenn das Paket detektiert wurde und die Demodulation fehlgeschlagen ist und die Empfangsleistung kleiner oder gleich dem vorbestimmten Wert ist, und "keine Detektion" anzeigt, wenn das Paket selbst nicht detektiert wird, für die jeweiligen Schlitze basierend auf einem von dem Paketdetektionsmittel (13) detektierten Resultat;
einem Sendeschlitzauswahlmittel (17) zum Auswählen des Schlitzes zum Senden des Pakets mit den zu sendenden Daten basierend auf der Rahmeninformation von dem Umgebungsendgerät, die von dem Rahmeninformationsspeichermittel (15) gespeichert wird, und der Rahmeninformation, die von dem Rahmeninformationserzeugungsmittel (16) erzeugt wird; und
einem Sendemittel (20, 21) zum Senden des Pakets zu einer Zeit des Sendeschlitzes, der durch das Sendeschlitzauswahlmittel (17) ausgewählt wird.

9. Kommunikationsendgerät nach Anspruch 8, bei dem bezüglich eines Sendeschlitzes, in dem ein Paket gesendet wird, das Sendeschlitzauswahlmittel (17) dazu angepasst ist, den Sendeschlitz gemäß Anzahlen einer Detektion einer "hohen Detektion" und einer "niedrigen Detektion" zu ändern, wenn die "hohe Detektion" oder die "niedrige Detektion" für die jeweiligen Pakete detektiert werden.

10. Kommunikationsendgerät nach Anspruch 8, bei dem bezüglich eines Sendeschlitzes, in dem ein Paket gesendet wird, das Sendeschlitzauswahlmittel (17) dazu angepasst ist, den Sendeschlitz zu ändern, wenn eine bestimmte Anzahl von Malen kontinuierlich eine "hohe Detektion" für die jeweiligen Pakete detektiert wird.

11. Kommunikationsendgerät nach einem der Ansprüche 1 bis 10, ferner mit:
einem Schlitzbelegungsratendetektionsmittel zum Detektieren einer Schlitzbelegungsrate, die eine Rate der in dem Rahmen belegten Schlitze angibt, basierend auf dem von dem Empfangsmittel (11, 12) empfangenen Paket; und
einem Steuermittel zum Steuern der Anzahl von belegten Schlitzen pro Rahmenzeitdauer des Sendens durch das Kommunikationsendgerät selbst basierend auf der Schlitzbelegungsrate,
die durch das Schlitzbelegungsanteildetektionsmittel detektiert wird, und der Senderate der Daten gemäß der Anzahl von belegten Schlitzen,
wobei das Sendemittel (20, 21) dazu angepasst ist, das Paket gemäß der Anzahl von belegten Schlitzen und der Senderate, die durch das Steuermittel gesteuert werden, zu senden.

## Revendications

1. Appareil terminal de communication pour soumettre une trame répétée à intervalles prédéterminés à une division temporelle en une pluralité de fenêtres et à diffuser les données par unités de fenêtre à un ou plusieurs terminaux périphériques, l'appareil terminal de communication comprenant:
un moyen de réception (11, 12) pour recevoir un paquet transmis par un terminal périphérique;
un moyen de détection de paquet (13) pour détecter par quelle fenêtre le paquet reçu par le moyen de réception (11, 12) est reçu;
un moyen de démodulation (14) pour démoduler les données du paquet reçu;
un moyen de stockage d'information de trame (15) pour stocker une pluralité de parties d'information de trame obtenues par démodulation du paquet reçu;
un moyen de génération d'information de trame (16) pour générer l'information de trame indiquant "occupé" quand la réception du paquet a réussi et indiquant "libre" quand la réception du paquet a échoué pour les fenêtres respectives sur la base d'un résultat détecté par le moyen de détection de paquet (13);
un moyen de sélection de fenêtre de transmission (17) pour sélectionner la fenêtre pour transmettre le paquet comprenant les données à transmettre sur la base de l'information de trame du terminal périphérique stockée par le moyen de stockage d'information de trame (15) et de l'information de trame générée par le moyen de génération d'information de trame (16); et
un moyen de transmission (20, 21) pour transmettre le paquet à un moment sélectionné par le moyen de sélection de fenêtre de transmission (17) pour la fenêtre de transmission,
dans lequel, par rapport à la propre fenêtre de transmission de l'appareil terminal de communication, le moyen de sélection de fenêtre de transmission (17) est adapté pour changer la fenêtre de transmission quand "libre" est reçu du même terminal périphérique en continu sur une pluralité de trames.

2. Appareil terminal de communication pour à soumettre une trame répétée à intervalles prédéterminés à une division temporelle en une pluralité de fenêtres et à diffuser des données par unités de fenêtre à un ou plusieurs terminaux périphériques, l'appareil terminal de communication comprenant:
un moyen de réception (11, 12) pour recevoir un paquet transmis par un terminal périphérique;
un moyen de détection de paquet (13) pour détecter par quelle fenêtre le paquet reçu par le moyen de réception (11, 12) est reçu;
un moyen de démodulation (13) pour démoduler les données du paquet reçu;
des moyens de stockage d'information de trame (15) pour stocker une pluralité d'informations de trame obtenues par démodulation du paquet reçu;
un moyen de génération d'information de trame (16) pour générer l'information de trame indiquant "détection" quand le paquet est détecté et indiquant "non-détection" quand le paquet n'est pas détecté pour les fenêtres respectives sur la base d'un résultat détecté par le moyen de détection de paquet (13);
un moyen de sélection de fenêtre de transmission (17) pour sélectionner la fenêtre pour transmettre le paquet comprenant les données à transmettre sur la base de l'information de trame du terminal périphérique stockée dans le moyen de stockage d'information de trame (15) et de l'information de trame générée par le moyen de génération d'information de trame (16); et
un moyen de transmission (20, 21) pour transmettre le paquet à un moment sélectionné par le moyen de sélection de fenêtre de transmission (17) pour la fenêtre de transmission,
dans lequel, par rapport à la propre fenêtre de transmission de l'appareil terminal de communication, le moyen de sélection de fenêtre de transmission (17) est adapté pour utiliser la même fenêtre la prochaine fois que "détection" est détecté et, par rapport à une fenêtre autre que sa propre fenêtre de transmission, le moyen de sélection de fenêtre de transmission (17) est adapté pour interdire la sélection de la fenêtre comme sa propre fenêtre de transmission quand "détection" est détecté.

3. Appareil terminal de communication selon la revendication 2, dans lequel, par rapport à une fenêtre autre qu'une fenêtre de transmission dans laquelle le paquet est transmis, le moyen de sélection de fenêtre de transmission (17) est adapté pour déterminer la fenêtre autre que la fenêtre de transmission comme étant une fenêtre vacante quand l'information "non-détection" est détectée dans tous les paquets.

4. Appareil terminal de communication pour -soumettre une trame répétée à intervalles prédéterminés à une division temporelle en une pluralité de fenêtres et à diffuser des données par unités de fenêtre à un ou plusieurs terminaux périphériques, l'appareil terminal de communication comprenant:
un moyen de réception (11, 12) pour recevoir un paquet transmis par un terminal périphérique;
un moyen de détection de paquet (13) pour détecter par quelle fenêtre le paquet reçu par le moyen de réception (11, 12) est reçu;
un moyen de démodulation (14) pour démoduler les données du paquet reçu;.
un moyen de stockage d'information de trame (15) pour stocker une pluralité d'informations de trame obtenues par démodulation du paquet reçu;
un moyen de génération d'information de trame (16) pour générer l'information de trame indiquant "réserve" quand la démodulation du paquet a réussi, indiquant "détection" quand le paquet a été détecté mais que la démodulation a échoué, et indiquant "non-détection" quand le paquet même n'est pas détecté, pour les fenêtres respectives sur la base d'un résultat détecté par le moyen de détection de paquet (13);
un moyen de sélection de fenêtre de transmission (17) pour sélectionner la fenêtre pour transmettre le paquet comprenant les données à transmettre sur la base de l'information de trame du terminal périphérique stockée par le moyen de stockage d'information de trame (15) et de l'information de trame générée par le moyen de génération d'information de trame (16); et
un moyen de transmission (20, 21) pour transmettre le paquet à un moment sélectionné par le moyen de sélection de fenêtre de transmission (17) pour la fenêtre de transmission.

5. Appareil terminal de communication selon la revendication 4, dans lequel, par rapport à une fenêtre de transmission dans laquelle un paquet est transmis, le moyen de sélection de fenêtre de transmission (17) est adapté pour changer la fenêtre de transmission quand uniquement "détection" est détecté dans les paquets respectifs.

6. Appareil terminal de communication selon la revendication 4, dans lequel, par rapport à la fenêtre de transmission dans laquelle un paquet est transmis, le moyen de sélection de fenêtre de transmission (17) est adapté pour changer la fenêtre de transmission quand "détection" et "non-détection" sont détectés dans les paquets respectifs.

7. Appareil terminal de communication selon la revendication 4, dans lequel, par rapport à une fenêtre autre qu'une fenêtre de transmission dans laquelle un paquet est transmis, le moyen de sélection de fenêtre de transmission (17) est adapté pour changer ou maintenir la fenêtre de transmission en fonction des nombres d'augmentation ou de diminution des "réserve" et "détection" détectés dans l'un quelconque des paquets.

8. pour à soumettre une trame répétée à intervalles prédéterminés à une division temporelle en une pluralité de fenêtres et à diffuser des données par unités de fenêtre à un ou plusieurs terminaux périphériques, l'appareil terminal de communication comprenant:
un moyen de réception (11, 12) pour recevoir un paquet transmis par un terminal périphérique;
un moyen de détection de paquet (13) pour détecter par quelle fenêtre le paquet reçu par le moyen de réception (11, 12) est reçu;
un moyen de démodulation (14) pour démoduler les données du paquet reçu;
un moyen de stockage d'information de trame (15) pour stocker une pluralité d'informations de trame obtenues par démodulation du paquet reçu;
un moyen de génération d'information de trame (16) pour générer l'information de trame indiquant "réserve" quand la démodulation du paquet a réussi, indiquant "détection élevée" quand le paquet a été détecté mais que la démodulation a échoué et quand une puissance de réception dépasse une valeur prédéterminée, indiquant "faible détection" quand le paquet a été détecté mais que la démodulation a échoué et quand la puissance de réception est égale ou inférieure à la valeur prédéterminée, et indiquant "non-détection" quand le paquet même n'est pas détecté, pour les fenêtres respectives sur la base d'un résultat détecté par le moyen de détection de paquet (13);
un moyen de sélection de fenêtre de transmission (17) pour sélectionner la fenêtre pour transmettre le paquet comprenant les données à transmettre sur la base de l'information de trame du terminal périphérique stockée par le moyen de stockage d'information de trame (15) et de l'information de trame générée par le moyen de génération d'information de trame (16); et
un moyen de transmission (20, 21) pour transmettre le paquet à un moment sélectionné par le moyen de sélection de fenêtre de transmission (17) pour la fenêtre de transmission.

9. Appareil terminal de communication selon la revendication 8, dans lequel, par rapport à une fenêtre de transmission dans laquelle un paquet est transmis, le moyen de sélection de fenêtre de transmission (17) est adapté pour changer la fenêtre de transmission en fonction du nombre de détection "détection élevée" et "faible détection" quand "détection élevée" ou "faible détection" sont détectés dans les paquets respectifs.

10. 8, dans lequel, par rapport à une fenêtre de transmission dans laquelle un paquet est transmis, le moyen de sélection de fenêtre de transmission (8) est adapté pour changer la fenêtre de transmission quand uniquement "détection élevée" est détecté dans les paquets respectifs en continu pendant un nombre prédéterminé de fois.

11. Appareil terminal de communication selon l'une quelconque de la revendication 1 à la revendication 10, comprenant en outre:
un moyen de détection de taux d'occupation de fenêtre pour détecter un taux d'occupation de fenêtre indiquant un taux des fenêtres occupées dans la trame sur la base du paquet reçu par le moyen de réception (11, 12); et
un moyen de contrôle pour contrôler le nombre de fenêtres occupées par période de temps de trame de transmission par l'appareil terminal de communication même sur la base du taux d'occupation de fenêtre détecté par le moyen de détection de taux d'occupation de fenêtre, et le taux de transmission des données en fonction du nombre de fenêtres occupées,
dans lequel le moyen de transmission (20, 21) est adapté pour transmettre le paquet en fonction du nombre de fenêtres occupées et du taux de transmission contrôlé par le moyen de contrôle.
